(19) Europäisches Patentamt
European Patent Office
Office européen des brevets

(11) EP 1 488 834 A1

(12) **EUROPEAN PATENT APPLICATION**

(43) Date of publication:
**22.12.2004 Bulletin 2004/52**

(51) Int Cl.[7]: **A63F 13/10**

(21) Application number: **04003006.6**

(22) Date of filing: **11.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.06.2003 JP 2003177157**

(71) Applicant: **Nintendo Co., Limited**
**Minami-ku, Kyoto 601-8501 (JP)**

(72) Inventors:
- **Kimura, Hiroyuki, c/o Nintendo Co., Ltd.**
  **Kyoto 601-8501 (JP)**
- **Asuke, Shigeyuki, c/o Nintendo Co., Ltd.**
  **Kyoto 601-8501 (JP)**
- **Nakanishi, Keigo,**
  **System Res. & Developm. Co.,Ltd.**
  **Kyoto 601-8501 (JP)**

(74) Representative: **Altenburg, Udo, Dipl.-Phys.**
**Patent- und Rechtsanwälte**
**Bardehle . Pagenberg . Dost .**
**Altenburg - Geissler**
**Galileiplatz 1**
**81679 München (DE)**

(54) **Game machine and storage medium having stored therein a game program**

(57) A game machine realizes a puzzle game in which the game objective is attained by using a copy block which is additionally generated through a copying process in accordance with a predetermined operation by a player and whose number is restricted when increased. In the game machine, a block derived from the background data is taken as a copy source, and the additionally-generated copy block is rendered based on object data. When the additionally-generated copy block is placed at a fixed position, the copy block is replaced by a block derived from background data. Since a rendering process with the use of the object data is performed only on the character operable by the character, rewriting of map data can be minimized. Therefore, a process for generating a game image can be performed efficiently.

FIG. 6

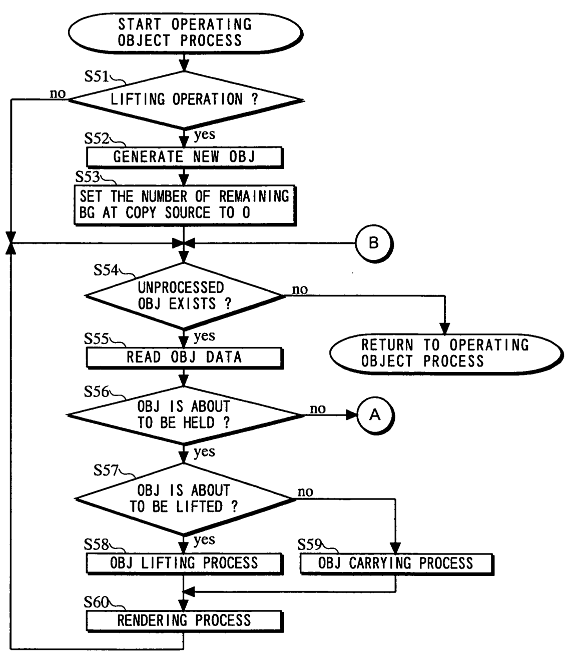


EP 1 488 834 A1

## Description

### BACKGROUND OF THE INVENTION

### Field of the Invention

The present invention relates to a game machine and a storage medium having stored therein a game program. More specifically, the present invention relates to a game machine for realizing a puzzle game in which a player operates a player character and blocks represented on a game screen to attain the game objective, and a storage medium having stored therein a game program of such a puzzle game.

### Description of the Background Art

Conventionally, various TV puzzle games have been known. One exemplary puzzle game is played such that the game is cleared by arranging a plurality of movable blocks placed in a fixed room with no space therebetween within a predetermined area. In order to clear this puzzle game, the player is required to go through trial and error to achieve an optimum operation of moving these blocks. Another exemplary puzzle game is played such that the game is cleared by collecting all gold ingots located on a fixed map. In this puzzle game, the player is required to find an optimum route by digging into the ground provided on the map for collecting the ingots. The games of these types that are played by solving a puzzle provided on a game screen have been widely available.

Also, a puzzle game is disclosed in "Solomon's Key complete strategy book", edited by Koj i Matsushita, first edition, JICC Press, October 5, 1986, pp. 13-18 (hereinafter referred to as a first conventional art) , in which a new block can be created ahead of a player character operated by the player through a predetermined operation. In this puzzle game, the player character can create a block many times or destroy blocks existing on the initial game screen. With these functions of creating and destroying blocks, the player character can move within a room and beat enemies by using blocks in order to obtain a key for proceeding to the next room.

On the other hand, another game using such blocks is disclosed in "Super Mario brothers 3 complete strategic technique book 5, digest edition", edited by Seiji Sato, first edition, Tokuma Communications Inc., August 10, 1989, pp.6-22 (hereinafter referred to as a second conventional art) . In this game, the player can operate a player character to destroy a predetermined block to make an item appear. Also, the player can perform a predetermined game operation to make the player character jump. With such a block operating function, the player can proceed to stages by operating the player character so as not to be beaten by enemy characters while the game screen is horizontally scrolled, with the objective of reaching the final goal. Also in this game, the player can stomp and then carry a specific enemy character, or can throw the specific enemy character to beat another enemy character.

In the puzzle game of the above first conventional art, the player can create and destroy blocks unconditionally. Therefore, such a high degree of flexibility in available blocks for achieving the objective of the game might degrade a strategic value of the game, such as how to arrange or move the blocks. As for the game of the second conventional art, although the game includesapuzzle-gameelementofdestroyingapredeterminedblock, the game is rather characterized as an action game, such as throwing a beaten enemy character. In this game, the player is not required to arrange or move blocks by trial and error.

### SUMMARY OF THE INVENTION

Therefore, an object of the present invention is to provide a game machine for realizing a puzzle game having a more strategic value, wherein a player operates a player character and blocks in order to attain a game objective, and is to further provide a storage medium having stored therein a game program of such a puzzle game.

The present invention adopts the following structure to achieve the object mentioned above. Note that reference characters and numerals in parentheses below merely show examples of correspondence with the embodiment described further below for the sake of better understanding of the present invention, and do not restrict the scope of the present invention.

A game machine (game machine 10) of the present invention presents a game in which a player character (player character 55) displayed on a game screen uses an object (blocks 52, copy block 56) to attain a game objective. The game machine includes: operating means (operation switches 13) ; player character displaying means (CPU 31 executing steps S4, S58, S59, and S60; only step numbers are hereinafter shown); background image generating means (S1, S53, S60, S62, S64, S66) ; copying means (S52) ; copy object image generating means (S54 through S66) ; and deciding means (S6). The operation means supplies operation data (operation signal) in response to an operation by a player. The player character displaying means moves and displays the player character (position data 325b of player character data 325) in accordance with operation data from the operating means. The background image generating means generates a background image of the game screen (game map data 328c) by combining a plurality of background characters (background character 328c specified by background data 327) for display. The copying means generates object data (operating object data 326) ofacopyobject (copy block 56) obtained by copying any one of the background characters (blocks 52) in accordance with predetermined operation data from the operating means (the operation switch 13b is ON with the player character 55 being mounted on the block 52) . The copy object image generating means updates the object data (position data 326ab of the operating obj ect data 326) of the copy obj ect in accordance with the operation data from the operating means and causes an image of the copy object to be displayed at a position derived from the updated object data. The deciding means decides by using the copy object (56) whether the player character has attained the game objective.

According to the above structure of the present invention, it is possible to realize a puzzle game in which the copy object additionally generated through a copying process in accordance with a predetermined operation by the player is used to attain the game objective. In order to realize such a puzzle game, a background character forming a background image is taken as a copy source, and the copy object additionally generated through the copying process is rendered based on object data. In other words, since the rendering process with the use of the object data, which is automatically rendered upon designation of its position coordinates, is performed only on the character operable by the player, rewriting of the map data indicative of the display position of each piece of the background data can be minimi zed. Furthermore, since the number of characters automatically rendered based on the object data can also be minimized, a process of generating a game image can be performed efficiently.

The above game machine can further include copy number restricting means (attribute data 327ab of the background data 327 and remaining number data 326ac of the operating object data 326 updated in steps S52 and S53) . The copy restricting means restricts the remaining number of times the background character can be copied by the copying means to generate the object data of the copy object. In this case, the background image generating means provides the number of times the background character can be copied generated by the copy number restricting means to a background character (block 52) that can be copied, and generates the background image including the background character having displayed therein the number of times the background character can be copied for display. With this, the player is required to go through trial and error to attain the game objective because the number of copy blocks that can be additionally generated through the copying process is limited and therefore flexibility is low. Thus, the game has a high strategic value in placing or moving the copy object.

Also, the above game machine can further include copy object placement detecting means (S63) and mount converting means (S64). The copy object placement detecting means detects that the copy object (56) has been placed adjacently to an upper portion of a predetermined background character (non-attachable structure 51, blocks 52, attachable structure 54) on the background image. Upon detection by the copy object placement detecting means (S63) that the copy object has been placed adjacently to the upper portion of the predetermined background character, the mount converting means converts this copy object to a background character (block 52c) with this copy object being mounted on the predetermined background character. In this case, the background image generating means generates the background image including the background character obtained through conversion by the mount converting means. Thus, the copy block generated through the copying process is replaced by a block derived from the background data upon placement at a fixed location. Therefore, the number of characters automatically rendered based on the object data can also be minimized, thereby making it possible to efficiently perform a process of generating a game image.

Furthermore, the above game machine can further include copy object placement detecting means (S61) and attachment converting means (862). The copy object placement detecting means detects that the copy object has been placed within a predetermined range (attachment decision range R) of a predetermined background character (attachable structure 54) on the background image. Upon detection by the copy object placement detecting means that the copy object has been placed within the predetermined range of the predetermined background character, the attachment converting means converts this copy object to a background character (block 52c) with the copy object being attached to a place selected from a group of a left portion, a right portion, and a bottom portion of the predetermined background character. In this case, the background image generating means generates the background image including the background character obtained through conversion by the attachment converting means. Thus, the copy block generated through the copying process is replaced by a block derived from the background data upon attachment to another character. Therefore, the number of characters automatically rendered based on the object data can also be minimized, thereby making it possible to efficiently perform a process of generating a game image. Also, the copy block generated through the copying process can be adjacently attached to a specific character, thereby providing a puzzle game having a more strategic value. Specifically, the copy object placement detecting means calculates a distance *(xab, yab*) by using position data (point *a*) of the predetermined background character and position data (point *b*) of the copy object (56) , and when the distance has a value equal to or smaller than a predetermined value (*d*), detects that the copy object (56) has been placed within the predetermined range. With this, the copy object is automatically attached to another character as long as the distance therebetween is somewhat short even if they are not closely adjacent to each other. Thus, the operability of the game can be improved.

Still further, the above game machine further includes target displaying means (S1). The target displaying means (S1) displays a target on the game screen, the target, when touched by another object, allowing the player to attain the game object. For example, the copy object is a block serving as a stair for the player character on the game image. In this case, the deciding means decides that the player character has attained the game objective when the player character makes contact with the target upon movement on the game screen by using the block as the stair, or when the player character causes the block to make contact with the target. With this, it is possible to realize a puzzle game in which the player character moves a copy block so as to reach the target by using this block as a stair.

A storage medium has stored therein a game program executed on a computer (CPU 31 of the game machine 10) presenting a game in which a player character displayed on a game screen uses an object to attain a game objective. The game program causes the computer (31) to execute steps including: a player character displaying step (S4, S58, S59, S60) ; a background image generating step (S1, S53, S60, S62, S64, S66); a copying step (S52); a copy object image generating step (S54 through S66); and a deciding step (S6) . The player character displaying step moves and displays the player character in response to operation data from an operating section (operation switches 13) supplying operation data in accordance with an operation by a player. The background image generating step generates a background image of the game screen by combining a plurality of background characters for display. The copying step generates object data of a copy object obtained by copying any one of the background characters in accordance with predetermined operation data from the operating section. The copy object image generating step updates the object data of the copy object in accordance with the operation data from the operating section and causes an image of the copy object (56) to be displayed at a position derived from the updated object data. The deciding step decides by using the copy object whether the player character has attained the game objective.

According to the above structure of the present invention, it is also possible in a storage medium having stored therein a game program executed by the computer to realize a puzzle game in which the copy object additionally generated through a copying process in accordance with a predetermined operation by the player is used to attain the game objective. In order to realize such a puzzle game, a background character forming a background image is taken as a copy source, and the copy object additionally generated through the copying process is rendered based on object data. In other words, since the rendering process with the use of the object data, which is automatically rendered upon designation of its position coordinates, is performed only on the character operable by the player, rewriting of the map data indicative of the display position of each piece of the background data can be minimized. Furthermore, since the number of characters automatically rendered based on the object data can also be minimized, a process of generating a game image can be performed efficiently.

The above game program can further cause the computer to perform a copy number restricting step (attribute data 327ab of the background data 327 and remaining number data 326ac of the operating object data 326 updated in steps S52 and S53) . The copy number restricting step restricts the number of times the background character can be copied in the copying step to generate the object data of the copy object. In this case, the background image generating step provides the number of times the background character can be copied generated by the copy number restricting means to a background character that can be copied and generates the background image including the background character having displayed therein the number of times the background character can be copied for display.

The above game program can further cause the computer to execute: a copy object placement detecting step (S63) and a mount converting step (S64). The copy object placement detecting step detects that the copy object has been placed adjacently to an upper portion of a predetermined background character on the background image. Upon detection in the copy object placement detecting step that the copy object has been placed adjacently to the upper portion of the predetermined background character, the mount converting step converts the copy object to a background character with the copy object being mounted on the predetermined background character. In this case, the background image generating step generates the background image including the background character obtained through conversion in the mount converting step.

The above game program can further cause the computer to execute: a copy object placement detecting step (S61) and an attachment converting step (S62). The copy object placement detecting step detects that the copy object has been placed within a predetermined range of a predetermined background character (52) on the background image. Upon detection in the copy object placement detecting step that the copy object has been placed within the predetermined range of the predetermined background character, the attachment converting step converts the copy obj ect to a background character with the copy object being attached to a place selected from a group of a left portion, a right portion, and a bottom portion of the predetermined background character. In this case, the background image generating step generates the background image including the background character obtained through conversion in the mounting/converting step. Also, specifically, the copy object placement detecting step calculates a distance by using position data of the predetermined background character and position data of the copy obj ect, and when the distance has a value equal to or smaller than a predetermined value, detects that the copy obj ect has been placed within the predetermined range.

Also, the above game program can further cause the computer to execute a target displaying step (S1). The target displaying step displays a target on the game screen, the target, when touched by another object, allowing the player to attain the game objective. For example, the copy object is a block serving as a stair for the player character on the game image. In this case, the deciding step decides that the player character has attained the game objective when the player character makes contact with the target upon movement on the game screen by using the block as the stair, or when the player character causes the block to make contact with the target.

These and other objects, features, aspects and advantages of the present invention will become more apparent from the following detailed description of the present invention when taken in conjunction with the accompanying drawings.

BRIEF DESCRIPTION OF THE DRAWING

FIG. 1 is an outline drawing of a portable game machine according to one embodiment of the present invention;
FIG. 2 is a functional block diagram of a game machine 10 and a cartridge 20 shown in FIG. 1;
FIG. 3 is an illustration showing data stored in a data storage area 320 of a WRAM 32 illustrated in FIG. 2;
FIG. 4 is an illustration showing data stored in a data storage area 322 of the WRAM 32 illustrated in FIG. 2;
FIG. 5 is a flowchart showing the entire game process performed by the game machine 10 illustrated in FIG. 1;
FIG. 6 is a first half of a subroutine of the detailed operation of step S5 in FIG. 5;
FIG. 7 is a second half of the subroutine of the detailed operation of step S5 in FIG. 5;
FIG. 8 illustrates an example of a game image 50a displayed on an LCD 12 through a game process of step S1 in FIG. 5;
FIG. 9 illustrates an example of the game image 50a displayed on the LCD 12 through a game process of step S58 in FIG. 6 that is performed on the game image 50a illustrated in FIG. 8;
FIG. 10 illustrates an example of the game image 50a displayed on the LCD 12 through a game process of step S59 in FIG. 6 that is performed on the game image 50a illustrated in FIG. 9;
FIG. 11 illustrates an example of the game image 50a displayed on the LCD 12 through a game process of step S65 in FIG. 7 that is performed on the game image 50a illustrated in FIG. 10;
FIG. 12 illustrates an example of the game image 50a displayed on the LCD 12 through a game process of step S64 in FIG. 7 that is performed on the game image 50a illustrated in FIG. 11;
FIG. 13 illustrates an example of the game image 50a displayed on the LCD 12 when a puzzle game represented by the game image 50a of FIG. 8 is about to be cleared;
FIG. 14 illustrates an example of a game image 50b displayed on the LCD 12 through a game process of step S1 of FIG. 5;
FIG. 15 illustrates an example of the game image 50b displayed on the LCD 12 through a game process of step S65 in FIG. 7 that is performed on the game image 50b illustrated in FIG. 14;
FIG. 16 illustrates an example of the game image 50b displayed on the LCD 12 through a game process of step S62 in FIG. 7 that is performed on the game image 50b illustrated in FIG. 15;
FIG. 17 illustrates an example of the game image 50b displayed on the LCD 12 when a puzzle game represented by the game image 50b of FIG. 14 is about to be cleared;
FIG. 18A is a schematic diagram for describing an attachment decision range R for a block attaching process in steps S61 and S62 of FIG. 7;
FIG. 18B is a schematic diagram for describing the inside of the attachment decision range R for the block attaching process in steps S61 and S62 of FIG. 7; and
FIG. 18C is a schematic diagram for describing an attached block in the block attaching process in steps S61 and S62 of FIG. 7.

DESCRIPTION OF THE PREFERRED EMBODIMENT

The configuration of a game machine according to an embodiment of the present invention is described. Although FIG. 1 is an outline drawing of a portable game machine according to the embodiment of the present invention, the present invention is not restricted to such a portable game machine but can be applied to a non-portable game machine.

In FIG. 1, a game machine 10 uses a game cartridge (hereinafter simply referred to as a cartridge) 20 as a storage medium for storing information, such as a game program. With the cartridge 20 being inserted in the game machine 10 in a direction indicated by an arrow in the drawing, semiconductor memories (including a program ROM 21 and a backup RAM 22 shown in FIG. 2) that are included in the cartridge 20 and the game machine 10 are electrically connected to each other. An upper portion of the back surface of the game machine 10 has formed thereon a cartridge insertion slot (not shown) for allowing the cartridge 20 to be removably inserted therein. In the vicinity of the bottom of this cartridge insertion slot, a connector 14 (surrounded by a bold dotted line in the drawing) is provided for electrical connection with the cartridge 20. Furthermore, the back surface of the game machine 10 has provided thereon a connector 16 (surrounded by a thin dotted line in the drawing) for connection with a cable enabling communicable connection with another game machine.

The game machine 10 includes a housing 11, whose one main surface (the front surface shown in the drawing) has a liquid crystal display (LCD) 12 formed on its center area. Other areas sandwiching the LCD 12 and one side surface of the housing 11 are provided with a loudspeaker 15 and operation switches 13a through 13g. Operation instructions given by these operation switches 13a through 13g vary depending on the game program to be processed on the game machine 10. Typically, however, the operation switch (cross key) 13a gives an instruction associated with a moving direction, the operation switches 13b and 13c give instructions associated with operations of "A" and "B", for example, the operation switches 13d and 13e give instructions associated with operations, such as "START" and "SELECT", and the operation switches 13f and 13g give instructions associated with operations, such as "L" and "R". By way of example only, the operation switch 13a is used for instruction of a moving direction of the player character. The operation switches 13b, 13c, 13f, and 13g are mainly used, for example, for instruction of a motion of the player character (such as jump, kick, throw). Particularly, the operation switch 13b is called "A button", which is used for instruction of a motion of the player character, such as lifting or throwing a block, which will be described further below. Also, the operation switch 13d is used, for example, for game start instruction. The operation switch 13e is used, for example, for selection in a menu displayed on the screen.

FIG. 2 is a functional block diagram showing the game machine 10 and the cartridge 20. In FIG. 2, the game machine 10 includes, in addition to the above-described components, a central processing unit (CPU) 31, a working RAM (WRAM) 32, an image processing unit 33, a video RAM (VRAM) 34, a sound unit 35, an input/output (I/O) unit 36, and an LCD driver 37. The cartridge 20 includes the program ROM 21, the backup RAM 22, and an I/O unit 23.

The program ROM 21 has stored therein a game program, in which a game to be played on the game machine 10 is described, as well as its image and sound data. Based on this game program, the CPU 31 operates in a game process mode. The I/O unit 36 has connected thereto connectors 14 and 16, the operation switches 13, and the CPU 31. The I/O unit 36 outputs data received from the connectors 14 and 16 and the operation switches 13 to the CPU 31, and outputs data received from the CPU 31 to the connectors 14 and 16. The connector 16 communicably connects the game machine 10 and another game machine 40 via a connection cable.

The CPU 31 processes a boot program stored in a boot ROM (not shown) , and also operates in the game process mode based on the game program stored in the program ROM 21. Upon insertion of the cartridge 20 in the game machine 10, the CPU 31 accesses the program ROM 21 via the I/O unit 36, the connector 14, and the I/O unit 23. Also, the CPU 31 performs a game process based on an operation signal supplied by any of the operation switches 13 and the game program, causing in-progress data to be stored in the WRAM 32 and image data to be temporarily stored in the VRAM 34 via the image processing unit 33.

When the CPU 31 operates in the game process mode, the WRAM 32 is used, when appropriate, as a storage area for storing the game program, process data, etc., required for a process to be performed by the CPU 31.

The sound unit 35 includes a D/A converter circuit and an amplifier circuit for converting sound data obtained based on the results of the game program process performed by the CPU 31 to sound signals (analog signals), and amplifying these signals as appropriate for output as sound or sound effect.

The image processing unit 33 performs image processing based on an instruction from the CPU 31, and is structured by, for example, a semiconductor chip for performing computation required for graphic display. The image processing unit 33 uses storage areas of the WRAM 32 and the VRAM 34 for image processing. By using these areas, the image processing unit 33 generates game image data to be displayed on the LCD 12, and then outputs the game image data to the LCD 12 via the VRAM 34 as appropriate. The VRAM 34 temporarily stores the image data processed by the image processing unit 33. The LCD driver 37 has connected thereto the VRAM 34 and the LCD 12, and performs display control so as to cause the image data stored in the VRAM 34 to be displayed on the LCD 12.

On the other hand, the program ROM 21 of the cartridge 20 has fixedly stored therein the game program and various data to be used for the game program. In the backup RAM 22, game data obtained through execution of the game program is stored in a rewritable and non-volatile manner. An example of the game data stored in the backup RAM 22 is backup data indicative of the progress made until the game ends. Note that the backup RAM 22 may be structured by a flash memory or the like.

FIGS. 3 and 4 are illustrations showing the data stored in the WRAM 32. The WRAM 32 has stored therein temporary data generated in the course of the game process. In FIG. 3, the WRAM 32 includes a program storage area 320 having stored therein a main program 321a, a player character operation program 321b, a player character display program 321c, an operating object display program 321d, an operating object attaching program 321e, a rendering program 321f, a clear decision program 321g, and a time count program 321h. The main program 321a is a program defining the entire game process. Upon start of the main program 321a, the game process starts (refer to FIG. 5). The player character operation program 321b defines an operation process of the player character in accordance with an operation signal from any of the operation switches 13 (refer to step S3 of FIG. 5). The player display program 321c defines a process of displaying the player character on a game screen in accordance with a motion of the player character or the like (refer to step S4 of FIG. 5) . The operating object display program 321d defines processes of generating obj ect data in accordance with an operation signal fromany of the operation switches 13 (hereinafter referred to as operating object data) and then displaying an operating object image derived from the operating obj ect data on the game screen (refer to step S5 of FIG . 5) . The operating object attaching program 321e defines a process of attaching the operating object image and a background character image together (refer to steps S61 through S65 of FIG. 7) . The rendering program 321f defines processes of generating a background image by using a map data indicative of positions at which background character images are to be displayed on the game screen and rendering a game image by adding object images to the background image (refer to step S1 of FIG. 5, step S60 of FIG. 6, and step S66 of FIG. 7). The clear decision program 321g defines a process of deciding whether the game objective has been attained (refer to step S6 of FIG. 5). The time count program 321h defines a process of setting a time limit for attaining the game objective and deciding whether the time limit has expired (refer to step S2 of FIG. 5) .

In FIG. 4, the WRAM 32 includes a data storage area 322 having set therein an operation data buffer 323. Also, the data storage area 322 of the WRAM 32 has stored therein game map data 324, player character data 325, operating object data 326, background data 327, image data 328, and time count data 329.

The operation data buffer 323 having stored therein an operation signal supplied by any of the operation switches 13 through the I/O unit 36. By reading the data stored in the operation data buffer 323, the CPU 31 can obtain the operation signal indicative of the operation performed by the player using any of the operation switches 13.

The game map data 324 is map data serving as a reference for generating a game image. Specifically, the game map data 324 specifies the correspondence between background data 327 to be displayed and areas forming a lattice-patterned rendering area where background characters,which willbe describedfurther below, are respectively placed. Also, the entire rendering area specified by the game map data 324 is provided with, for example, position coordinates (x, y) defined by the x axis and the y axis.

The player character data 325 is data for specifying a player character image to be displayed on the LCD 12. Here, the player character image is automatically rendered upon designation of predetermined position coordinates, and is movable on the game image upon operation by the player using any of the operation switches 13. The player character data 325 includes image specifying data 325a for specifying the type of the player character image, position data 325b indicative of a position based on the position coordinates of the player character image, and state data 325c indicative of the current state of the player character.

The operating object data 326 is data for specifying an operating object image to be displayed on the LCD 12. Here, the operating object image represents a character automatically rendered upon designation of predetermined position coordinates. In the present embodiment, a "block" is rendered as a stair for the player character. Additional "blocks" can be generated (that is, the block can be copied). Inside the block, the remaining number of times the block can be copied is rendered. Thus, the operating obj ect data 326 includes a plurality of types of operating object data 326a through 326m. The operating object data 326a includes image specifying data 326aa for specifying the type of the operating object image, position data 326ab indicative of a position based on the position coordinates of the operating object image, and the remaining number data 326ac indicative of the remaining number of times the operating object can be copied. The same goes for the other operating object data 326b through 326m.

The background data 327 is data for specifying a background character image to be displayed on the LCD 12. Here, the background character image represents a character fixedly pasted on an area in the lattice-patterned rendering area specified by the game map data 324. In the present embodiment, "attachable structures" to which the above-described block can be attached, "non-attachable structures", and "blocks" each fixedly representing the above block are rendered. Thus, the background data 327 includes a plurality of types of background data 327a through 327n. The background data 327a includes image specifying data 327aa for specifying the type of the background character image and attribute data 327ab indicative of, for example, an attribute as to whether the above-described block can be attached or not. The same goes for the other background data 327b through 327n.

The image data 328 includes data of images of all characters to be displayed on the LCD 12. For example, the image data 328 includes a plurality of types of player character images 328a, operating object images 328b, and background character images 328c, which are specified by the above-described image specifying data 325a, 326aa, and 327aa.

The time count data 329 is obtained by keeping time in order to determine whether a time limit set by a time count program 321h for attaining the game objective has expired. This time count data 329 is updated by the CPU 31 performing a process of step S2.

With reference to FIGS. 5 through 18, the game process to be performed by the game machine 10 is described below. FIG. 5 is a flowchart showing the entire game process to be performed by the game machine 10. FIGS. 6 and 7 are a subroutine showing the detailed operation of step S5 of FIG. 5. FIGS. 8 through 17 are examples of a game image displayed on the LCD 12 through the game process for specifically describing the operation of the game process. FIGS. 18A through 18C are schematic illustrations for describing a block attaching process.

Upon power-on of the game machine 10, the CPU 31 of the game machine 10 executes a boot program stored in the boot ROM (not shown) to initialize each unit, such as the WRAM 32. Then, the game program stored in the program ROM 21 of the cartridge 20 is read into the WRAM 32 for start of execution by the CPU 31, and then a game image is presented on the LCD 12. In this manner, the game is started.

In FIG. 5, the CPU 31 performs a map rendering process in accordance with a puzzle map and a player character selected by the player of the game machine 10 performing a predetermined operation. Then, an initial screen of the puzzle map is displayed as a game image 50 on the LCD 12 (step S1). Specifically, the CPU 31 designates/selects the game map data 324, the player character data 325, the background data 327, and the image data 328 to generate the game image 50. At this time, the CPU 31 generates only the player character image based on object data which has a high flexibility with regard to a movement automatically rendered by designating position coordinates, and also generates the game image based on the background data fixedly pasted on the lattice-patterned rendering areaspecified bythe game map data 324. The CPU 31 then proceeds to the next step.

FIG. 8 illustrates one example of a game image 50a displayed on the LCD 12 through the process of the above-described step S1. The game image 50a represents a two-dimensional image of a space where gravity is defined in a vertical direction (that is, gravity is defined so as to act downward in FIG. 8) being viewed in a horizontal direction. The game image 50a contains images of a non-attachable structure 51, blocks 52, a target 53, and a player character 55. The non-attachable structure 51 is represented by combining a wall, a floor, a ceiling, etc. The non-attachable structure 51 is defined so as to have an attribute of not being able to overlay another object but being able to have another object placed thereon (upper horizontal side). In the example of FIG. 8, two blocks 52a and 52b and the player character 55 are placed on the upper surface of the non-attachable structure 51. The non-attachable structure 51 is defined so as not to be able to have another object attached to its side surface, and is represented by an image associated with metal, for example. In FIG. 8, the non-attachable structure 51 is hatched for easy discrimination from the other images.

The blocks 52 are defined so as to have an attribute of being able to have another object placed thereon (upper horizontal side). For example, when the player presses the operation switch 13b with the player character 55 mounting on one block 52, a copy block having the same attribute as that of the block 52 can be generated (copying process). Inside the block, the remaining number of times the block can be copied is rendered. In FIG. 8, the blocks 52a and 52b both have a number of "3" rendered therein as the remaining number of times the block can be copied.

The target 53 represents a character which the player character 55 or the copy block of object data, which will be described later, touches to clear the game of the puzzle map. An example of the target 53 is a coin. In FIG. 8, the player character 55 is rendered so as to be initially positioned on a lower-stair portion 51b of the non-attachable structure 51, and the target 53 is rendered so as to be placed in an upper space separated by an upper-stair portion 51a of the non-attachable structure 50. Therefore, in this puzzle map, the player character 55 cannot reach the target 53 without any aid. Note that, in the game image 50a, an area where none of the non-attachable structure 51, the blocks 52, or the target 53 is rendered (a space area in the drawing) represents a "space" where gravity acts downward.

With an operation by the user using any of the operation switches 13, the player character 55 can move in the game image 50a. For example, with the player operating the operation switch 13a, the player character 55 can move along the upper surface of the non-attachable structure 51 and the blocks 52. Also, with the player operating the operation switch 13c, the player character 55 can jump to a predetermined height. Furthermore, with the player operating the operation switch 13b, the player character 55 can lift and/or throw a copy block based on the object data.

Here, the non-attachable structure 51, the blocks 52, and the target 53 form the game image 50a all based on the background data. That is, the non-attachable structure 51, the blocks 52, and the target 53 are represented by background character images which are fixedly pasted on the lattice-patterned rendering area specified by the game map data 324 and are unable to be controlled by the player. The player character 55, on the other hand, is represented by an object image which is automatically rendered upon designation of its position coordinates and is able to be controlled by the player. Therefore, the player character 55 can move within the game image 50a in accordance with an operation signal from any of the operation switches 13 without being restricted to the lattice-patterned rendering area specified by the game map data 324.

Referring back to FIG. 5, the CPU 31 decides whether the time limit set by the time count program 321h for attaining the game objective has expired (step S2) . If the time limit has not yet expired, the CPU 31 proceeds to the next step S3. If the time limit has expired, the CPU 31 ends the game process shown in the flowchart.

In step S3, the CPU 31 obtains the operation signal received from any of the operation switches 13 through the I/O unit 36. Specifically, by reading, when appropriate, the data stored in the operation data buffer 323, the CPU 31 obtains the operation signal indicative of the operation by the player using any of the operation switches 13. The CPU 31 then proceeds to the next step.

Next, in accordance with the operation signal obtained in the above step S3, the CPU 31 performs a process of moving the player character (step S4). Specifically, based on the player character operation program 321b and the player character display program 321c, the CPU 31 designates the image specifying data 325a, the position data 325b, and the state data 325c in accordance with the above operation signal. With this, the CPU 31 designates the type and state of the player character image to be displayed on the game image 50 and the position thereof derived from the position coordinates. The CPU 31 then proceeds to the next step.

Next, in accordance with the operation signal obtained in the above step S3, the CPU 31 performs a process of moving the operating object (step S5). Note that this operating object process is performed based on the operating object display program 321d, the operating object attaching program 321e, and the rendering program 321f, which will be described further below in detail. The CPU 31 then proceeds to the next step.

Next, the CPU 31 determines whether the game objective has been attained (step S6) . Specifically, the CPU 31 makes this determination based on the clear decision program 321g. For example, when the target 53 makes contact with another character (such as the player character or a copy block), it is determined that the game objective has been attained. When the game objective has not yet been attained, the CPU 31 returns to the above step S2 to continue the game process shown in the flowchart until the game objective is attained.

With reference to FIGS. 6 and 7, the detailed operation of the operating object process of the above step S5 is described below. First, the CPU 31 determines whether the operation signal from any of the operation switches 13 indicates a lifting operation (step S51). For example, if the player has pressed the operation switch 13b with the player character 55 being mounted on the block 52 or 53 illustrated in FIG. 8, the CPU 31 determines that a lifting operation has been performed. In this case, the CPU 31 then proceeds to the next step S52. If a lifting operation has not been performed, the CPU 31 proceeds to the next step S54.

In step S52, the CPU 31 generates new operating object data 326 having the same attribute as that of the background data 327 which is subjected to the lifting operation in the above step S51. Specifically, if the lifting operation has been performed with the player character 55 being mounted on the block 52b illustrated in FIG. 8, the block 52b is copied to generate a copy block having the same attribute, and the CPU 31 then generates operating object data 326 for rendering the generated copy block as an operating object image. That is, with the lifting operation, the background data 327 to be subjected thereto is copied to generate new operating object data 326. This process of generating operating object data is hereinafter referred to as a copying process for description. As the copying process is performed once in this step S52, the CPU 31 subtracts 1 from the remaining number data 326ac of the operating object data 326 for designation. The CPU 31 then proceeds to the next step.

Next, the CPU 31 sets the remaining number of copiable times indicated in the copy-source background character image (the block) as 0 (step S53). Specifically, the CPU 31 updates the remaining number included in the attribute data 327ab of the background data 327 subjected to the above operation to 0. The CPU 31 then proceeds to the next step S54.

FIG. 9 is another example of the game image 50a displayed after the game image 50a of FIG. 8 is generated, the processes of the above step S51 through S53 are performed, and then a lifting process (S58) and a rendering process (S60) , which will be described further below, are performed. In FIG. 9, if a lifting operation has been performed with the player character 55 being mounted on the block 52b, the block 52b is copied to generate a copy block 56 having the same attribute as that of the block 52b as an operating object image. Compared with FIG. 8, the copy block 56 derived from the operating object data has indicated therein the remaining number of "2", which is obtained by subtracting 1 from the remaining number of "3" of the block 52b derived from the background data illustrated in FIG. 8. Furthermore, in FIG. 9, the block 52b derived from the background data has indicated therein the remaining number of "0". As such, the block 52b derived from the background data is copied through a predetermined operation to generate the copy block 56 derived from the operating object data, thereby increasing the number of blocks displayed on the game image 50a.

In step S54, the CPU 31 determines whether an unprocessed operating object data exists. If an unprocessed operating object data exists, the CPU 31 proceeds to the next step S55. If no unprocessed operating object data exists, the CPU 31 ends the operating object process through the subroutine.

In step S55, the CPU 31 reads the unprocessed operating object data 326 found in the above step S54. The CPU 31 then determines whether the operating object image (the copy block) represented based on the operating object data 326 is about to be heldby the player character (step S56) . If the operating object image is about to be held by the player character, the CPU 31 proceeds to the next step S57. If the operating object image is not about to be held, the CPU 31 proceeds to the next step S61.

In step S57, the CPU 31 determines whether the operating object image (the copy block) represented based on the above operating object data 326 is about to be lifted by the player character. If the operating object image is about to be lifted by the player character, the CPU 31 proceeds to the next step S58. If the operating object image is not about to be lifted, the CPU 31 proceeds to the next step S59.

In step S58, the CPU 31 performs a motion process in which the operating object image (the copy block) represented based on the above operating object data 326 is lifted by the player character. Specifically, the CPU 31 sets the state data 325c of the player character data 325 as a lifting motion, and sets the position data 326ab of the operating object data 326 to position coordinates in accordance with the lifting motion. The CPU 31 then proceeds to the next step S60.

In step S59, on the other hand, the CPU 31 performs a motion process in which the operating object image (the copy block) represented based on the above operating object data 326 is carried by the player character. Specifically, the CPU 31 sets the state data 325c of the player character data 325 as a carrying motion, and sets the position data 326ab of the operating object data 326 to position coordinates in accordance with the carrying motion. Note that the carrying motion in the above step S59 includes a throwing motion in which the operating obj ect image (the copy block) represented based on the above operating object data 326 is thrown by the player character. This throwing motion includes any motion to be made until the operating object image (the copy block) goes away from the player character. In this case, the CPU 31 sets the state data 325c of the player character data 325 as a throwing motion, and sets the position data 326ab of the operating object data 326 to position coordinates in accordance with the throwing motion. The CPU 31 then proceeds to the next step S60.

In step S60, based on the rendering program 321f and each piece of the currently-designated data, the CPU 31 generates a background image derived from the background data in the game map data 324, and then adds the object data image to the background image, thereby performing a process of rendering the game image. Specifically, the CPU 31 performs a rendering process by causing each piece of the image data 328 derived from the background data to be placed in the relevant area of the lattice-patterned rendering area specified by the game map data 324 (that is, causing the background character images to be placed), and causing the image data 328 specified by the player character data 325 and the operating object data 326 to be placed in accordance with their position coordinates (that is, causing the object images to be placed). Note that the example of the game image 50a illustrated in FIG. 9 shows that the player character 55 is rendered after completing the lifting motion. Also, still another example of the game image 50a illustrated in FIG. 10 shows that the player character 55 completing a motion of carrying the copy block 56 is rendered. The CPU 31 then returns to the above step S54 to continue the process.

In step S61, on the other hand, the CPU 31 determines whether the operating object image (the copy block) represented based on the unprocessed operating object data 326 found in the above step S54 is located within a predetermined range from an attachment destination to which the operating object image is to be attached. This step S61 will be described further below in detail. If the operating object image is located within a predetermined range from the attachment destination, the CPU 31 proceeds to the next step S62. If the operating object image is located outside the predetermined range, the CPU 31 proceeds to the next step S63.

In step S63, the CPU 31 determines whether the operating object image (the copy block) represented based on the operating object data 326 has thereunder a background character image on which that operating object image can mount. If such a background character image exists under the operating obj ect image, the CPU 31 performs a process of mounting the operating object image on the upper portion of the background character image, converts the operating object data 326 to the background data 327 (step S64) , and then proceeds to the next step S66. Specifically, the CPU 31 copies the relevant operating object data 326 to generate new background data 327. If no such background character image exists under the operating object image, , on the other hand, the CPU 31 performs an air flying process on the relevant operating object data (step S65), and then proceeds to the next step S66. Specifically, the CPU 31 updates the position data 326ab of the relevant operating object data 326 so that the operating object image is represented on the game image as flying in the air.

In step S66, as with the above step S60, based on the rendering program 321f and each piece of the currently-designated data, the CPU 31 generates a background image derived from the background data in the game map data 324. The CPU 31 then adds the object data image to the generated background image, thereby performing a process of rendering a game image. The CPU 31 then returns to the above step S54 for continuing the process.

FIG. 11 is still another example of the game image 50a subjected to a rendering process performed after the air flying process of the above step S65. The copy block 56 derived from the operating object data is thrown away by the player character 55. Also, no background character image on which the copy block 56 can mount exits thereunder. Therefore, the copy block 56 is represented as flying in the air (indicated by a dotted arrow in the drawing). In this example, the copy block 56 is represented as freely falling downward in the space of the game image 50a. Alternatively, in accordance with factors, such as a horizontal moving speed of the player character 55 before throwing, or another motion such as jumping, it is possible to represent an air flying motion having free falling added with a horizontal or vertical flying speed.

FIG. 12 is still another example of the game image 50a subjected to the rendering process performed after the operating object data is converted to the background data in the above step S64. The copy block 56 derived from the operating object data is represented as being thrown away by the player character 55 to be flown in the air (indicated by a dotted arrow in the drawing), and then being landed on the lower-stair portion 51b of the non-attachable structure 51. When the lower portion of the copy block 56 is landed on the lower-stair portion 51b, the operating object data is copied to the background data. In the game image 50a, a block 52c derived from that background data is represented on the lower-stair portion 51b. As evident from comparison with FIG. 11, the copy block 56 derived from the operating object data is represented in the game image 50a of FIG. 12 as the block 52c derived from the background data having the operating object data copied thereto (that is, as a background character image having the same attribute as that of the copy block 56) . This block 52c is the background character image that can be copied through a predetermined operation performed by the player. Furthermore, inside the block 52c, the remaining number of times the block can be copied, that is, "2", is displayed, which is taken over from the copy block 56. Here, in the game image 50a of FIG. 12, one example is shown where the copy block 56 derived from the operating object data mounts on the non-attachable structure 51. The same process is also performed when the copy block 56 mounts on the block 52 derived from another background data. That is, the player can place the copy block being carried by the player character on the upper portion of another block.

By causing the player character to repeat motions of lifting (copying) , carrying, and throwing the above-described copy block, the player can put the copy block on various places. FIG. 13 shows blocks 52c through 52h that are obtained by copying the blocks 52a and 52b illustrated in FIG. 8 and are then piled up stepwise. As illustrated in FIG. 13, the player piles up the blocks 52c through 52h stepwise, thereby making it possible for the player character 55 to move up to the upper-stair portion 51a (indicated by a dotted arrow in the drawing) . With this, the player character 55 can reach the target 53, thereby clearing the puzzle game.

Next, the predetermined range from the attachment destination for determination by the CPU 31 in the above step S61 is described. FIG. 14 is an example of a game image 50b including the above attachment destination displayed on the LCD 12 through the process of the above step S1. The game image 50b contains image representation of an attachable structure 54, as well as the non-attachable structure 51, the blocks 52, the target 53, and the player character 55 described above. As with the non-attachable structure 51, the attachable structure 54 is represented by combining a wall, a floor, a ceiling, etc. The attachable structure 54 is defined so as to have an attribute of not being able to overlay another object but being able to have another obj ect placed thereon and further being able to have another blocks attached on its side surface(s). Furthermore, a block attached to the attachable structure 54 is changed so as to be defined as having an attribute of being able to have another block attached to its side surface (s) . In the example of FIG. 14, the two blocks 52a and 52b and the player character 55 mount on the upper surface of the upper-stair portion 51a of the non-attachable structure 51. Furthermore, the attachable structure 54 is rendered at the tip of the upper-stair portion 51a. The attachable structure 54 is represented as an image different from that of the non-attachable structure 51, such as an image associated with a tree, for example. In FIG. 14, the attachable structure 54 is filled with black for easy discrimination from the other images. Furthermore, as with the non-attachable structure 51, the blocks 52, and the target 53, the attachable structure 54 is derived from the background data to form the game image 50b. That is, the attachable structure 54 is formed by a background character image fixedly pasted on the relevant area of the lattice-patterned rendering area specified by the game map data 324.

With reference to FIGS. 18A through 18C, the predetermined range for use in decision by the CPU 31 with regard to attachment to the attachable structure 54 is described below. In FIG. 18A, the attachable structure 54 has an attachment decision range $R$ for decision with regard to attachment of the operating object image. For the attachable structure 54 is a square each side of which has a length of w, the attachment decision range $R$ is formed by a square each side of which has a length of $2d$ ($d > w$). The attachment decision range $R$ is formed by centering at a predetermined point $a$ of the attachable structure 54 (a upper left corner of the square area, for example) . The position coordinates specified by the game map data 324 are defined by the x axis and the y axis which are perpendicular to each other. The point a is located at position coordinates ($xa$, $ya$).

Also as for the copy block 56 based on the operating object data 326, its position on the map of the game map data 324 is specified based on the position coordinates. For example, the position coordinates of the copy block 56 is also set to a point $b$ of the upper left corner of the square area, that is, position coordinates ($xb$, $yb$). In the above step S61, the CPU 31 determines whether the point b of the copy block 56 is inside the attachment decision range R of the attachable structure 54. That is, when a distance $xab$ between the point $a$ ($xa$, $ya$) and the point $b$ ($xb$, $yb$) in the x axis direction and a distance $yab$ therebetween in the y axis direction are both shorter than the length of $d$, that is,

$xab = |xa - xb| \leqq d$ and $yab = | xa - xb| \leqq d$,

the CPU 31 determines that the copy block 56 is inside of the attachment decision range R of the attachable structure 54 (such a state is shown in FIG. 18B) . Since *xab*> din the state illustrated in FIG. 18A, the CPU 31 determines that the copy block 56 is outside the attachment decision range R of the attachable structure 54.

Referring back to FIG. 7, in step S62, the CPU 31 causes the operating object image to be attached to the attachment destination, converts the operating object data 326 to the background data 327, and then proceeds to the next step S66. For example, in the state illustrated in FIG. 18B, the position coordinates of the point b of the copy block 56 are set to

$$(xb, yb) = (xa + w, ya),$$

thereby causing the copy block 56 to be attached to the attachable structure 54. The CPU 31 then copies the operating object data 326 of the attached operating object image to generate new background data 327. Therefore, the attached block becomes a background character image based on the background data 327 (the block 52 in FIG. 18C). The background data 327 of the block attached to the attachable structure 54 is changed so that the attribute data 327ab indicates that a side surface of the block can have another block attached thereon. Then, in step S66, as described above, based on the rendering program 321f and the each piece of the currently-designated data, the CPU 31 generates a background image based on the background data indicated by the game map data 324, adds the object data image to the background image, thereby performing a process of rendering a game image.

FIGS. 15 through 17 illustrate examples of the game image 50b based on the background data shown in FIG. 14. The player performs a lifting operation of the player character 55 on the block 52b based on the background data shown in FIG. 14 (step S51) thereby obtaining a copy block 56 based on the operating object data through the above-described copying process (step S52). The player then performs an operation of the player character 55 for throwing the copy block 56 toward the attachable structure 54 (step S59) (a state shown in FIG. 15) . The thrown copy block 56 flies in the air (step S65), and then eventually reaches inside the attachment decision range R of the attachable structure 54 (step S61) . The copy block 56 based on the operating object data is attached to the side surface of the attachable structure 54, and is then converted to the block 52c based on the background data (a state shown in FIG. 16) . The attribute of the block 52c ) attached to the attachable structure 54 is changed so as to be defined as having an attribute of being able to have another block attached on its side surface.

With the player repeating such an attaching process, six blocks 52c through 52h are consecutively attached to the tip of the attachable structure 54 (a state shown in FIG. 17). As illustrated in FIG. 17, with the blocks 52c through 52h being connected to the attachable structure 54, the player can move the player character 55 to a space into which the upper-stair portion 51a does not extend (indicated by a dotted arrow in the drawing). With this, the player character 55 can reach the target 53, thereby making it possible to clear the puzzle game.

As such, according to the game machine of the present embodiment, it is possible to realize a puzzle game in which its game objective is attained by using a copy block additionally generated through a copying process in accordance with a predetermined operation by the player. Furthermore, the player is required to go through trial and error to attain the game objective because the number of copy blocks that can be additionally generated through a copying process is limited and is therefore low in flexibility. Thus, the game has a high strategic value in placing or moving the copy block. For the purpose of realizing such a puzzle game, the present game machine copies the block derived from the background data and, based on the object data, renders a copy block additionally generated through the copying process. Then, the copy block generated through the copying process is replaced by a block derived from the background data upon placement at a fixed location. That is, since the rendering process with the use of the object data, which is automatically rendered upon designation of its position coordinates, is performed only on the character operable by the character, rewriting of the map data indicative of the display position of each piece of the background data can be minimized. Furthermore, since the number of characters automatically rendered based on the object data can also be minimized, a process of generating a game image can be performed efficiently. Still further, in the present game machine, the copy block generated through the above copying process can not only be placed on another character but also be adjacently attached to a specific character, thereby providing a puzzle game having a more strategic value.

In the above description of the present embodiment, the copy source block is a character derived from the background data. Alternatively, the copy source block may also be a character derived from the object data. For example, a block moving in the game screen is taken as the copy source block, and its copy block can be additionally generated through a copying process similar to that described above. Furthermore, needless to say, the character additionally generated through the above copying process is not restricted to a block, but may be any as long as the character is for the player character to attain the game objective. Still further, in the above embodiment, an example has been described in which the block is to be attached to the side surface of the attachable structure. Alternatively, the block can be processed so as to be attached to the lower surface of the attachable structure.

Also, in the above description of the present embodiment, a game cartridge is used as a medium for storing information, such as a game program. However, the storage medium for storing the game program of the present invention is not restricted to the above. For example, when the game program of the present invention is processed by a non-portable game machine, the game program may be stored on an optical disk or the like and then read for a process similar to that described above. Still further, this game program can be supplied through another medium or a communication line.

While the invention has been described in detail, the foregoing description is in all aspects illustrative and not restrictive. It is understood that numerous other modifications and variations can be devised without departing from the scope of the invention.

## Claims

**1.** A game machine (10) presenting a game in which a player character (55) displayed on a game screen uses an object (52, 56) to attain a game objective, comprising:

operating means (13) supplying operation data in response to an operation by a player;
player character displaying means (S4, S58, S59, S60) moving and displaying the player character (55) in accordance with operation data from the operating means (13);
background image generating means (S1, S53, S60, S62, S64, S66) generating a background image of the game screen by combining a plurality of background characters (328c) for display;
copying means (S52)' generating object data (326) of a copy object (56) obtained by copying any one of the background characters (52) in accordance with predetermined operation data from the operating means (13);
copy object image generating means (S54 through S66) updating the object data (326) of the copy object (56) in accordance with the operation data from the operating means (13) and causing an image of the copy object (56) to be displayed at a position derived from the updated object data (326); and
deciding means (S6) deciding by using the copy object (56) whether the player character (55) has attained the game objective.

**2.** The game machine (10) according to claim 1, further comprising:

copy number restricting means (S52, S53) restricting the number of times the background character (52) can be copied by the copying means (S52) to generate the object data (326) of the copy object (56), wherein
the background image generating means (S1, S53, S60, S62, S64, S66) provides the number of times the background character (52) can be copied generated by the copy number restricting means (S52, S53) to a background character (52) that can be copied and generates the background image including the background character having displayed therein the number of times the background character (52) can be copied for display.

**3.** The game machine (10) according to claim 1, further comprising:

copy object placement detecting means (S63) detecting that the copy object (56) has been placed adjacently to an upper portion of a predetermined background character (51, 52, 54) on the background image; and
mount converting means (S64) converting, upon detection by the copy object placement detecting means (S63) that the copy object (56) has been placed adjacently to the upper portion of the predetermined background character (51, 52, 54), the copy object (56) to a background character (52) with the copy object (56) being mounted on the predetermined background character (51, 52, 54), wherein
the background image generating means (S1, S53, S60, S62, S64, S66) generates the background image including the background character (52) obtained through conversion by the mount converting means (S64).

**4.** The game machine (10) according to claim 1, further comprising:

copy object placement detecting means (S61) detecting that the copy object (56) has been placed within a predetermined range of a predetermined background character (54) on the background image; and
attachment converting means (S62) converting, upon detection by the copy object placement detecting means (S61) that the copy obj ect (56) has been placed within the predetermined range of the predetermined background character (52), the copy object (56) to a background character (52) with the copy object (56) being attached to a place selected from a group of a left portion, a right portion, and a bottom portion of the predetermined background character (54), wherein
the background image generating means (S1, S53, S60, S62, S64, S66) generates the background image including the background character (52) obtained through conversion by the attachment converting means (S62).

**5.** The game machine (10) according to claim 4, wherein

the copy object placement detecting means (S61) calculates a distance by using position data of the predetermined background character (54) and position data of the copy object (56), and when the distance has a value equal to or smaller than a predetermined value, detects that the copy object (56) has been placed within the predetermined range.

**6.** The game machine (10) according to claim 1, further comprising:

target displaying means (S1) displaying a target (53) on the game screen, the target (53), when touched by another obj ect, allowing the player to attain the game objective, wherein
the copy object (56) is a block serving as a stair for the player character (55) on the game image, and
the deciding means (S6) decides that the player character (55) has attained the game objective when the player character (55) makes contact with the target (53) upon movement on the game screen by using the block as the stair, or when the player character (55) causes the block to make contact with the target (53).

**7.** A storage medium (20) having stored therein a game program executed on a computer (31) presenting a game in which a player character (55) displayed on a game screen uses an object (52, 56) to attain a game objective, the game program causing the computer (31) to execute steps comprising:

a player character displaying step (S4, S58, S59, S60) of moving and displaying the player character (55) in accordance with operation data from an operating section (13) supplying operation data in response to an operation by a player;
a background image generating step (S1, S53, S60, S62, S64, S66) of generating a background image of the game screen by combining a plurality of background characters (328c) for display;
a copying step (S52) of generating object data (326) of a copy object (56) obtained by copying any one of the background characters (52) in accordance with predetermined operation data from the operating section (13);
a copy object image generating step (S54 through S66) of updating the object data (326) of the copy object (56) in accordance with the operation data from the operating section (13) and causing an image of the copy object (56) to be displayed at a position derived from the updated object data (326); and
a deciding step (S6) of deciding by using the copy obj ect (56) whether the player character (55) has attained the game objective.

**8.** The storage medium (20) having stored therein the game program according to claim 7, wherein

the game program further causes the computer (31) to execute a copy number restricting step (S52, S53) of restricting the number of times the background character (52) can be copied in the copying step (S52) to generate the object data (326) of the copy object (56), and
the background image generating step (S1, S53, S60, S62, S64, S66) provides the number of times the background character (52) can be copied generated by the copy number restricting means (S52, S53) to a background character (52) that can be copied and generates the background image including the background character having displayed therein the number of times the background character (52) can be copied for display.

**9.** The storage medium (20) having stored therein the game program according to claim 7, wherein

the game program further causes the computer (31) to execute:

acopyobjectplacementdetectingstep (S63) ofdetecting that the copy object (56) has been placed adjacently to an upper portion of a predetermined background character (51, 52, 54) on the background image; and
a mount converting step (S64) of converting, upon detection in the copy object placement detecting step (S63) that the copy object (56) has been placed adjacently to the upper portion of the predetermined background character (51, 52, 54), the copy object (56) to a background character (52) with the copy object (56) being mounted on the predetermined background character (51, 52, 54), and
the background image generating step (S1, S53, S60, S62, S64, S66) generates the background image including the background character (52) obtained through conversion in the mount converting step (S64).

**10.** The storage medium (20) having stored therein the game program according to claim 7, wherein

the game program further causes the computer (31) to execute:

acopyobjectplacementdetectingstep (S61) of detecting that the copy object (56) has been placed within a predetermined range of a predetermined background character (52) on the background image; and

an attachment converting step (S62) of converting, upon detection in the copy object placement detecting step (S61) that the copy object (56) has been placed within the predetermined range of the predetermined background character (54), the copy object (56) to a background character (52) with the copy object (56) being attached to a place selected from a group of a left portion, a right portion, and a bottom portion of the predetermined background character (54), wherein

the background image generating step (S1, S53, S60, S62, S64, S66) generates the background image including the background character (52) obtained through conversion in the attachment converting step (S62).

**11.** The storage medium (20) having stored therein the game program according to claim 10, wherein

the copy object placement detecting step (S61) calculates a distance by using position data of the predetermined background character (54) and position data of the copy object (56), and when the distance has a value equal to or smaller than a predetermined value, detects that the copy object (56) has been placed within the predetermined range.

**12.** The storage medium (20) having stored therein the game program according to claim 7, wherein

the game program further causes the computer (31) to execute a target displaying step (S1) of displaying a target (53) on the game screen, the target (53), when touched by another obj ect, allowing the player to attain the game objective, the copy object (56) is a block serving as a stair for the player character (55) on the game image, and

the deciding step (S6) decides that the player character (55) has attained the game objective when the player character (55) makes contact with the target (53) upon movement on the game screen by using the block as the stair, or when the player character (55) causes the block to make contact with the target (53).

F I G. 1

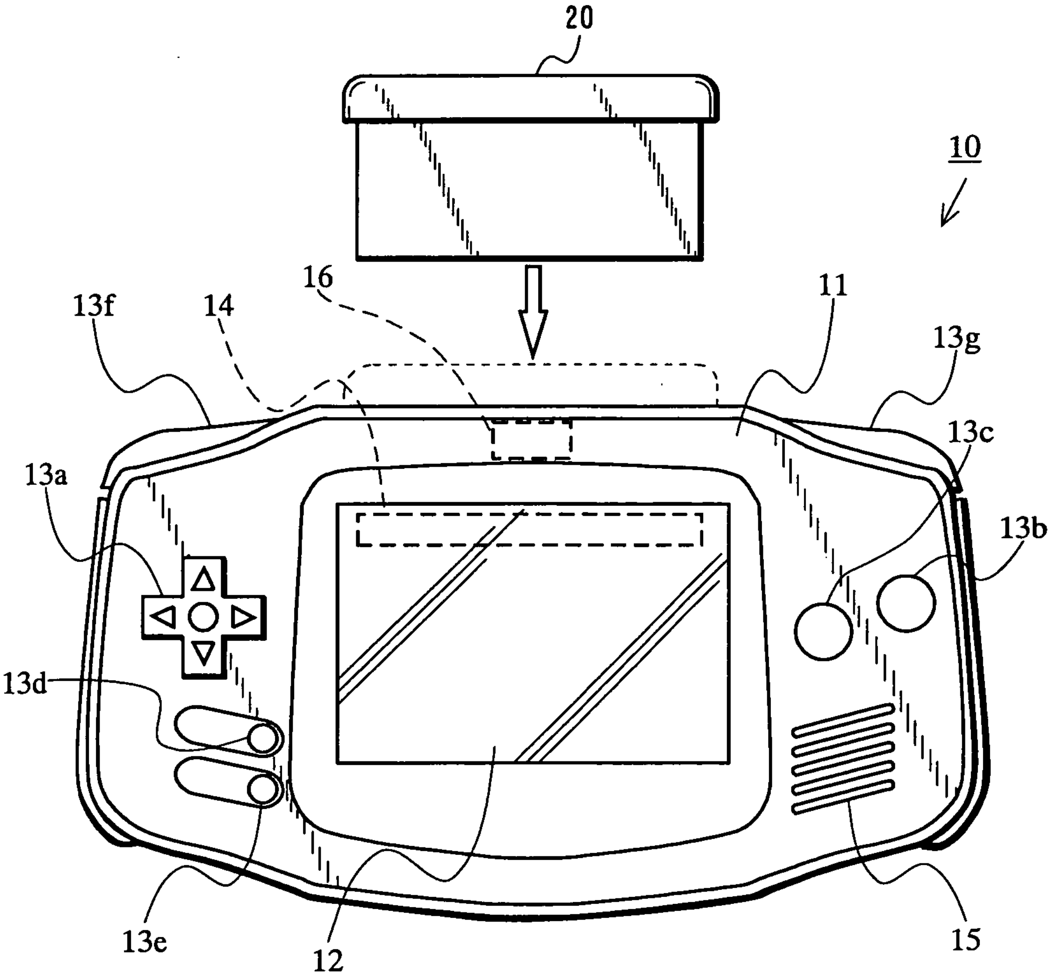

FIG. 2

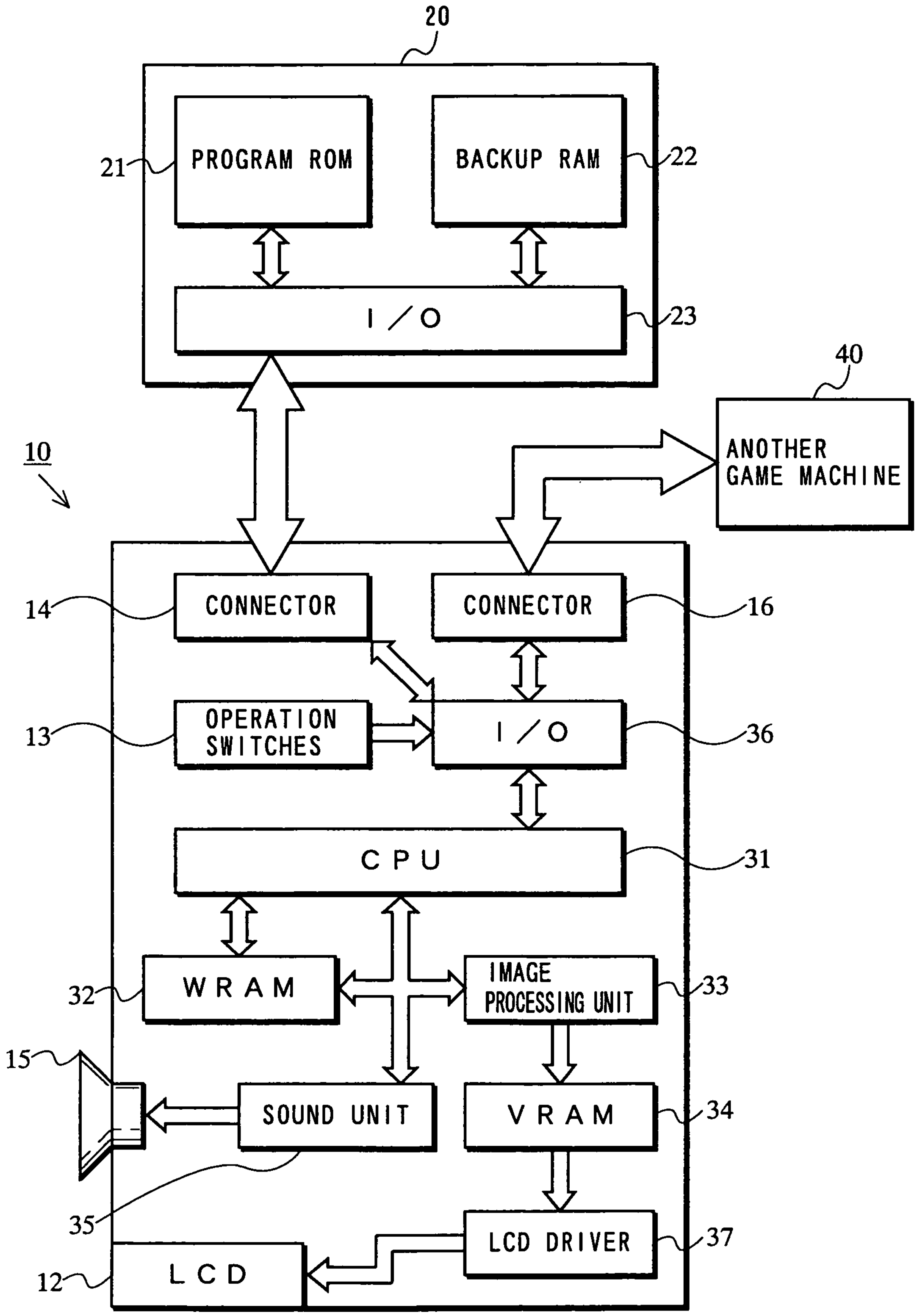
20
PROGRAM ROM
21
BACKUP RAM
22
I/O
23
40
ANOTHER GAME MACHINE
10
CONNECTOR
14
CONNECTOR
16
OPERATION SWITCHES
13
I/O
36
CPU
31
WRAM
32
IMAGE PROCESSING UNIT
33
15
SOUND UNIT
VRAM
34
35
LCD DRIVER
37
LCD
12

F I G. 3

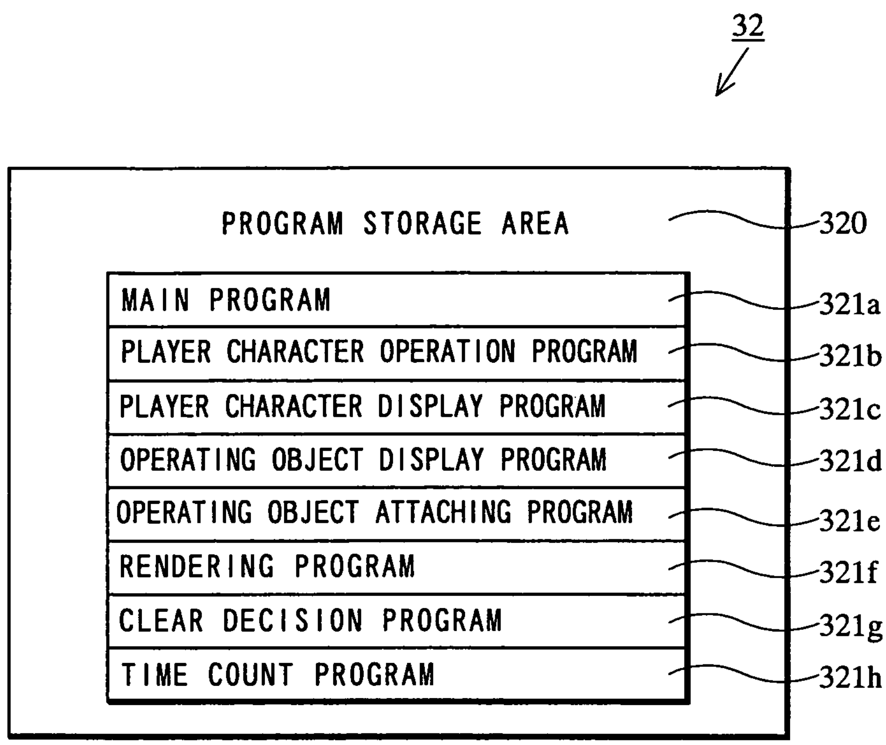
32
PROGRAM STORAGE AREA
320
MAIN PROGRAM
321a
PLAYER CHARACTER OPERATION PROGRAM
321b
PLAYER CHARACTER DISPLAY PROGRAM
321c
OPERATING OBJECT DISPLAY PROGRAM
321d
OPERATING OBJECT ATTACHING PROGRAM
321e
RENDERING PROGRAM
321f
CLEAR DECISION PROGRAM
321g
TIME COUNT PROGRAM
321h

F I G. 4

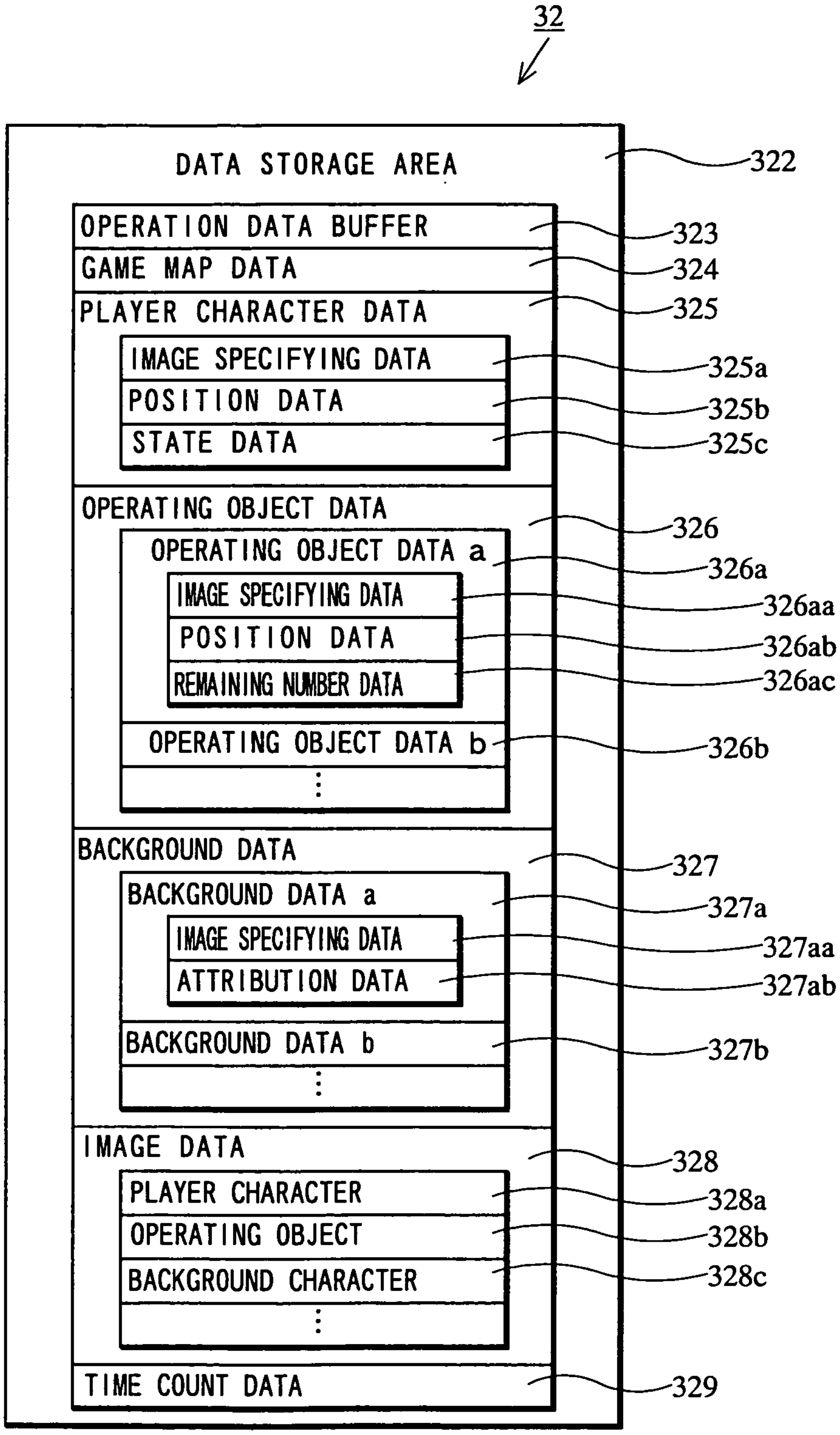
32
DATA STORAGE AREA
322
OPERATION DATA BUFFER
323
GAME MAP DATA
324
PLAYER CHARACTER DATA
325
IMAGE SPECIFYING DATA
325a
POSITION DATA
325b
STATE DATA
325c
OPERATING OBJECT DATA
326
OPERATING OBJECT DATA a
326a
IMAGE SPECIFYING DATA
326aa
POSITION DATA
326ab
REMAINING NUMBER DATA
326ac
OPERATING OBJECT DATA b
326b
BACKGROUND DATA
327
BACKGROUND DATA a
327a
IMAGE SPECIFYING DATA
327aa
ATTRIBUTION DATA
327ab
BACKGROUND DATA b
327b
IMAGE DATA
328
PLAYER CHARACTER
328a
OPERATING OBJECT
328b
BACKGROUND CHARACTER
328c
TIME COUNT DATA
329

F I G. 5

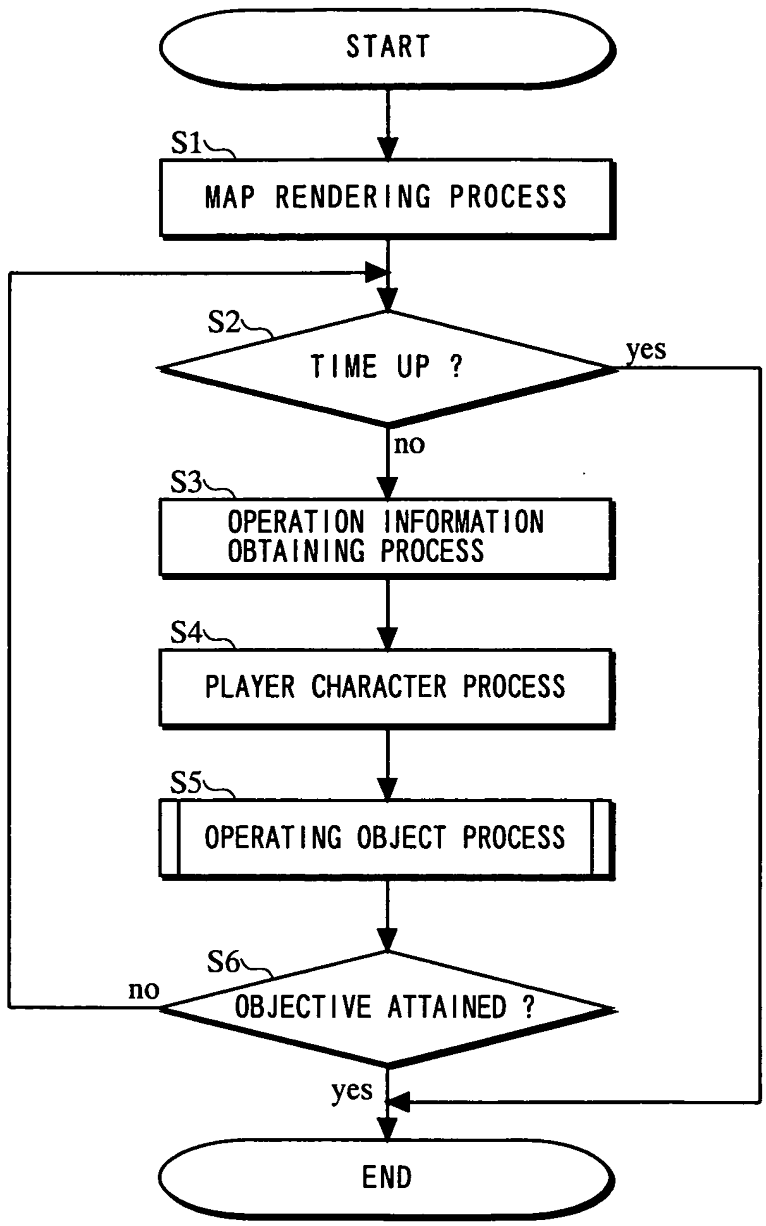
START
S1
MAP RENDERING PROCESS
S2
TIME UP ?
yes
no
S3
OPERATION INFORMATION
OBTAINING PROCESS
S4
PLAYER CHARACTER PROCESS
S5
OPERATING OBJECT PROCESS
S6
OBJECTIVE ATTAINED ?
no
yes
END

F I G. 6

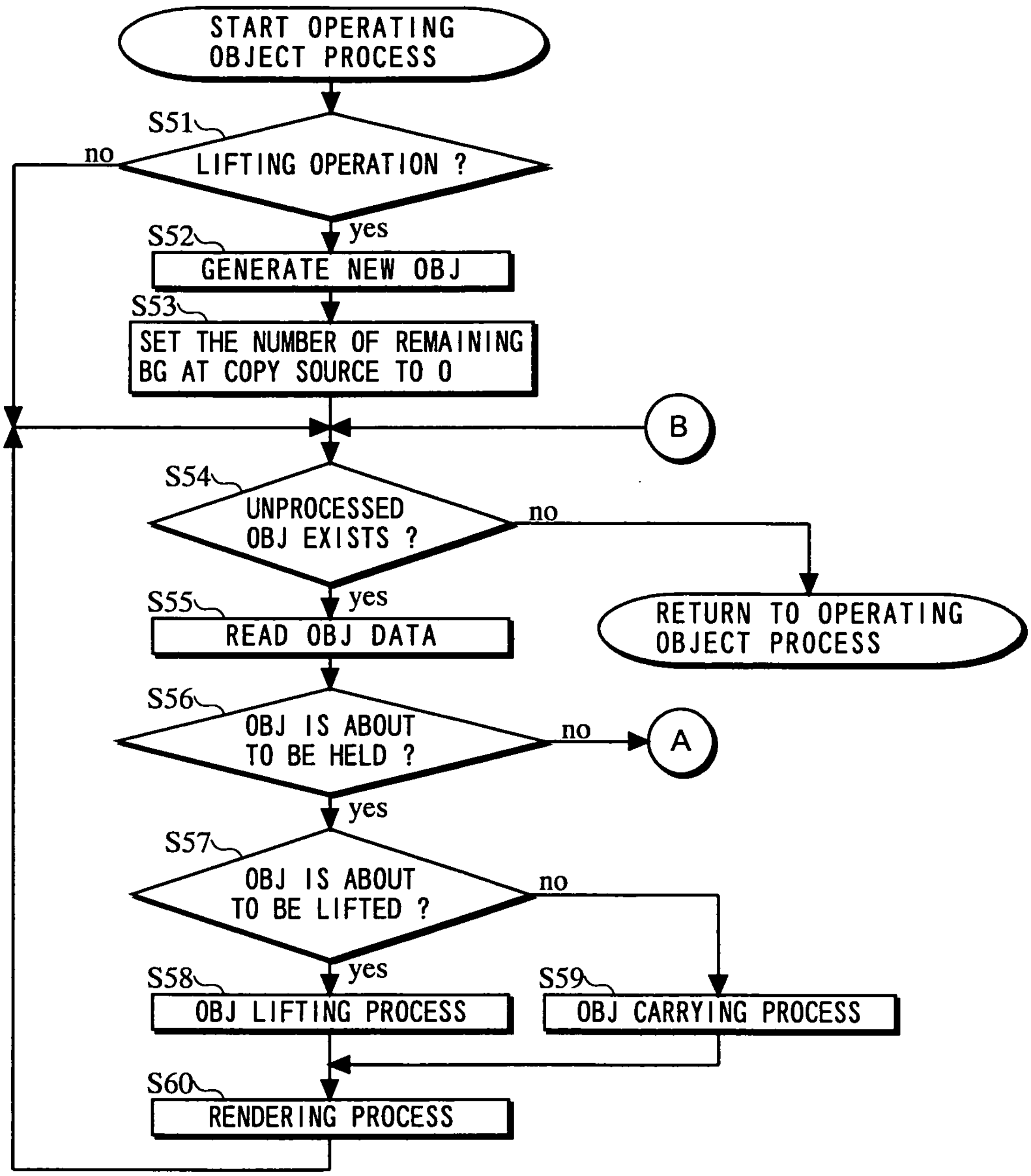
START OPERATING OBJECT PROCESS
S51
LIFTING OPERATION ?
no
yes
S52
GENERATE NEW OBJ
S53
SET THE NUMBER OF REMAINING BG AT COPY SOURCE TO 0
B
S54
UNPROCESSED OBJ EXISTS ?
no
RETURN TO OPERATING OBJECT PROCESS
yes
S55
READ OBJ DATA
S56
OBJ IS ABOUT TO BE HELD ?
no
A
yes
S57
OBJ IS ABOUT TO BE LIFTED ?
no
yes
S58
OBJ LIFTING PROCESS
S59
OBJ CARRYING PROCESS
S60
RENDERING PROCESS

F I G. 7

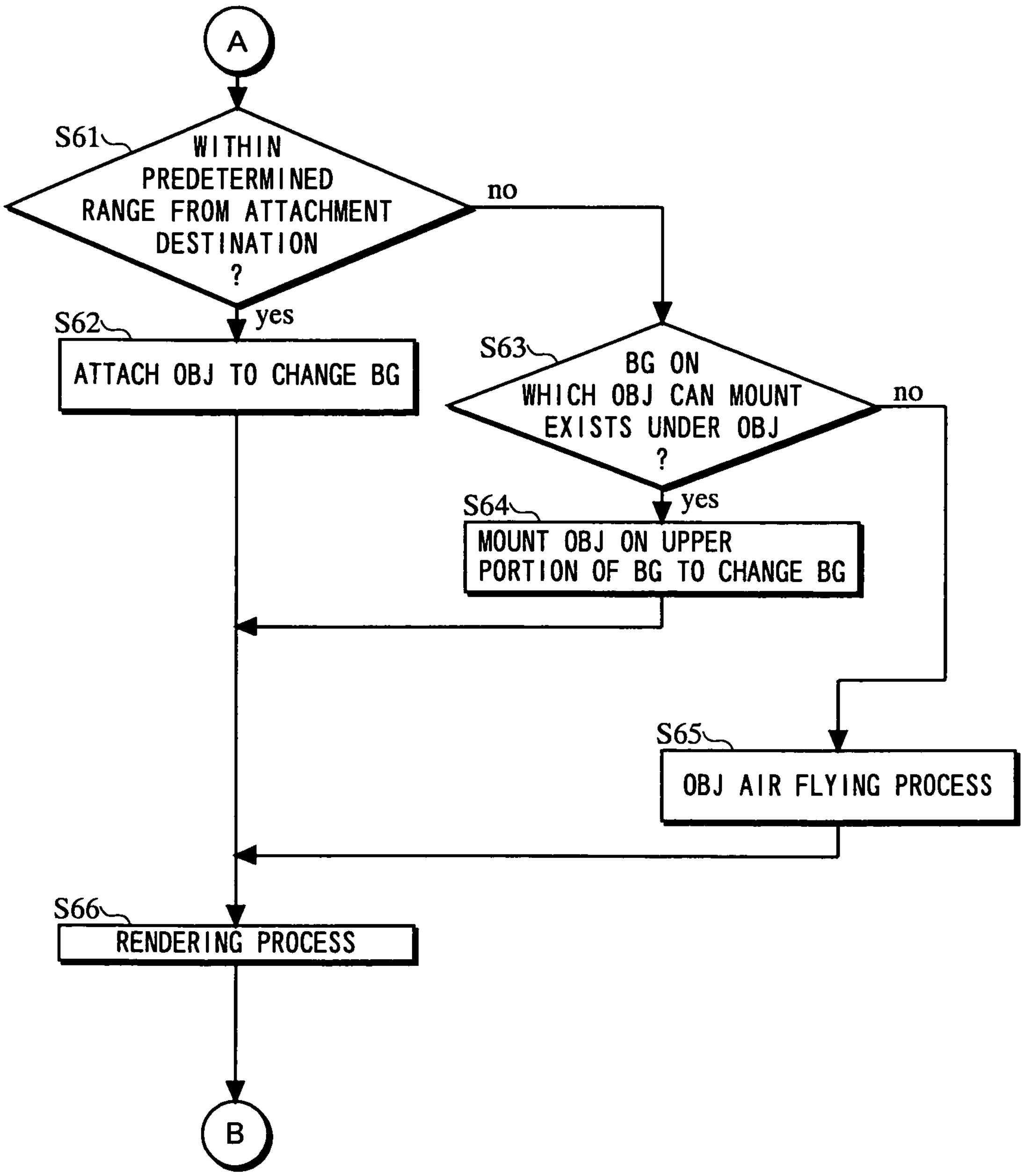
A
S61
WITHIN PREDETERMINED RANGE FROM ATTACHMENT DESTINATION ?
no
yes
S62
ATTACH OBJ TO CHANGE BG
S63
BG ON WHICH OBJ CAN MOUNT EXISTS UNDER OBJ ?
no
yes
S64
MOUNT OBJ ON UPPER PORTION OF BG TO CHANGE BG
S65
OBJ AIR FLYING PROCESS
S66
RENDERING PROCESS
B

F I G. 8

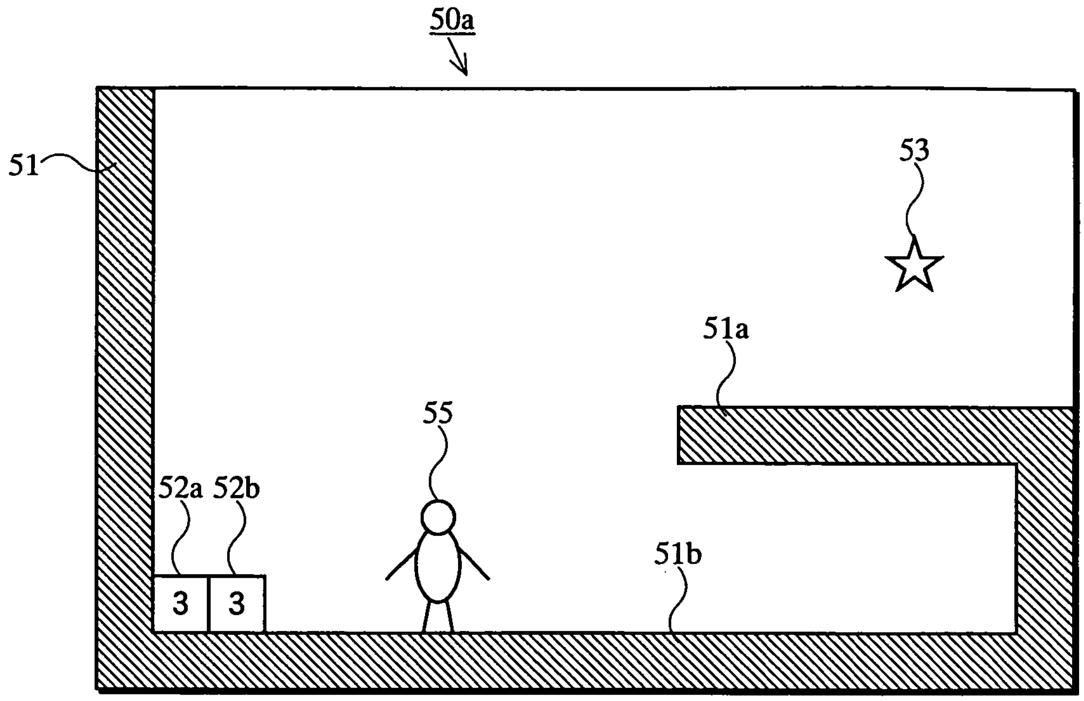


F I G. 9

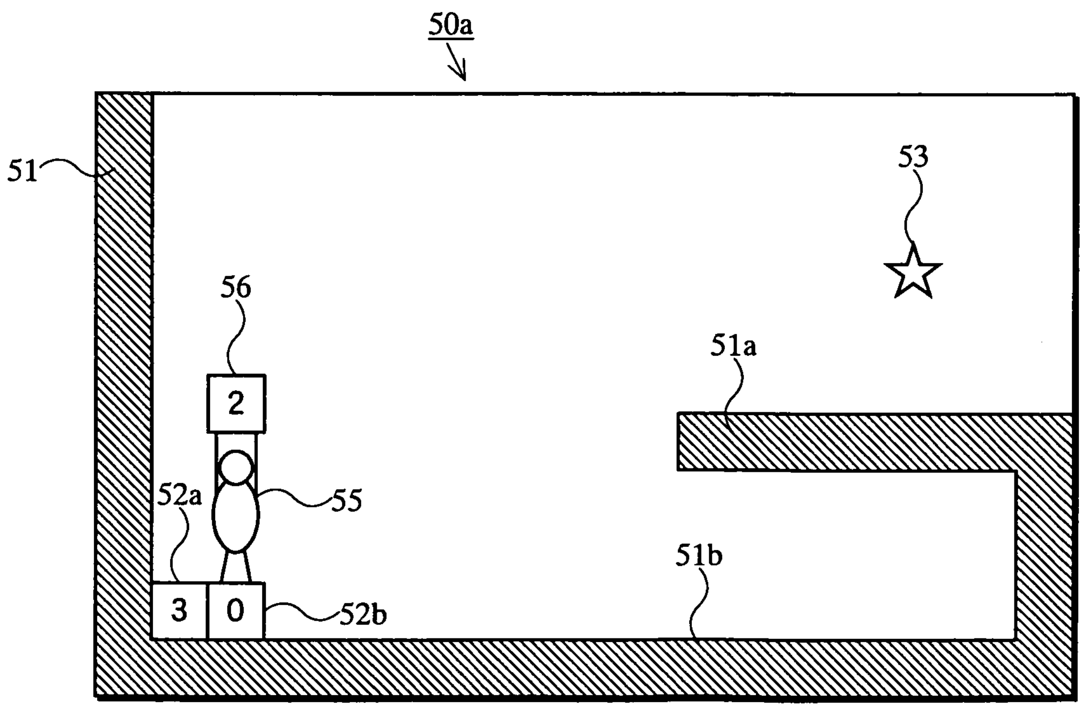

FIG. 10

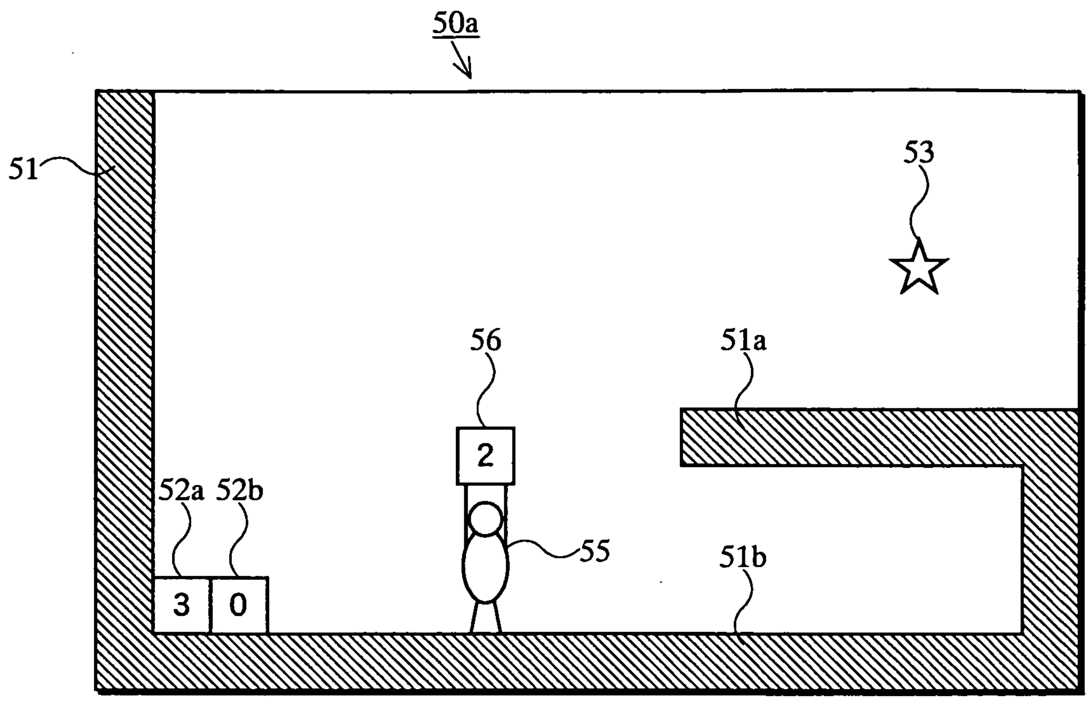
50a
51
53
56
51a
2
52a 52b
55
51b
3 0

FIG. 11

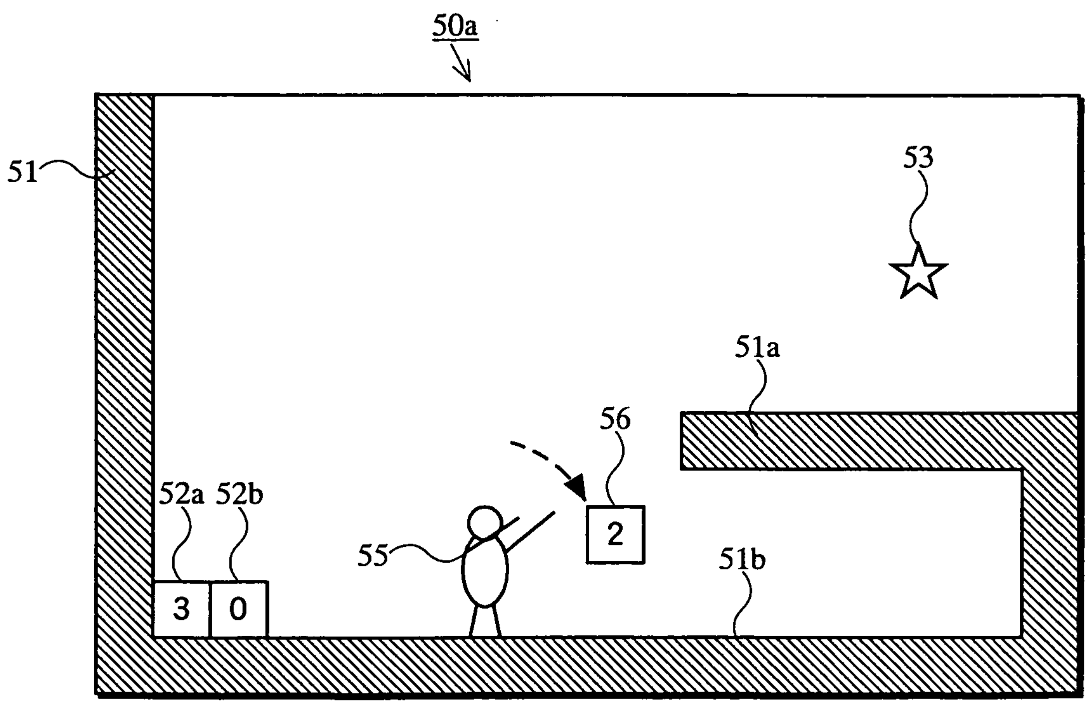
50a
51
53
51a
56
52a 52b
2
55
51b
3 0

FIG. 12

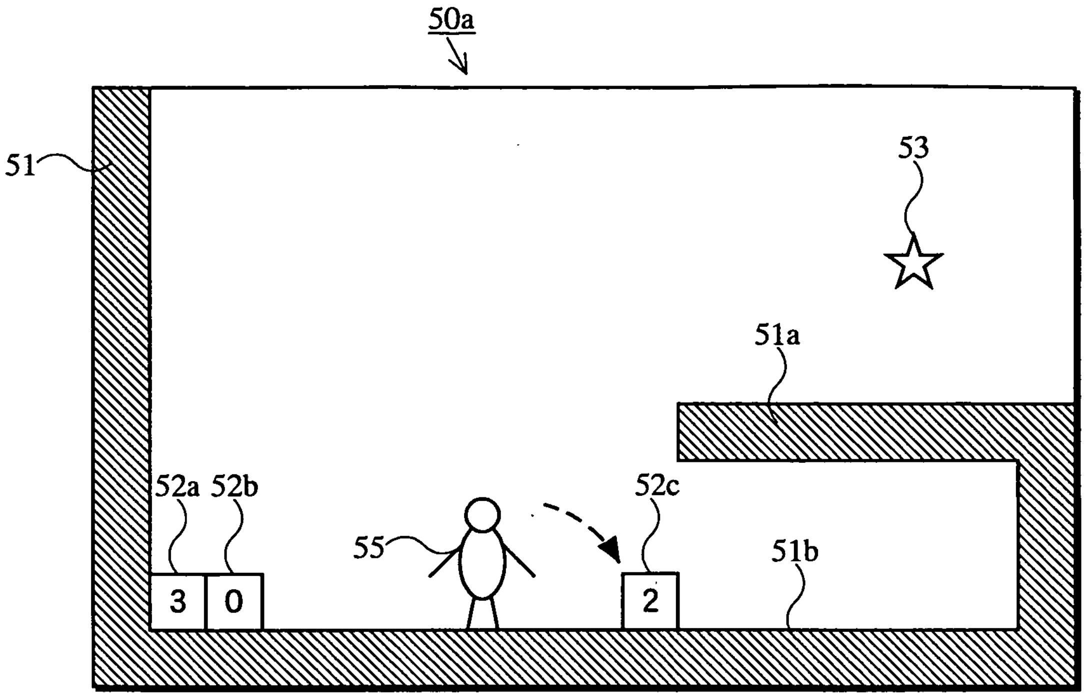
50a
51
53
51a
52a 52b
52c
55
51b
3
0
2

FIG. 13

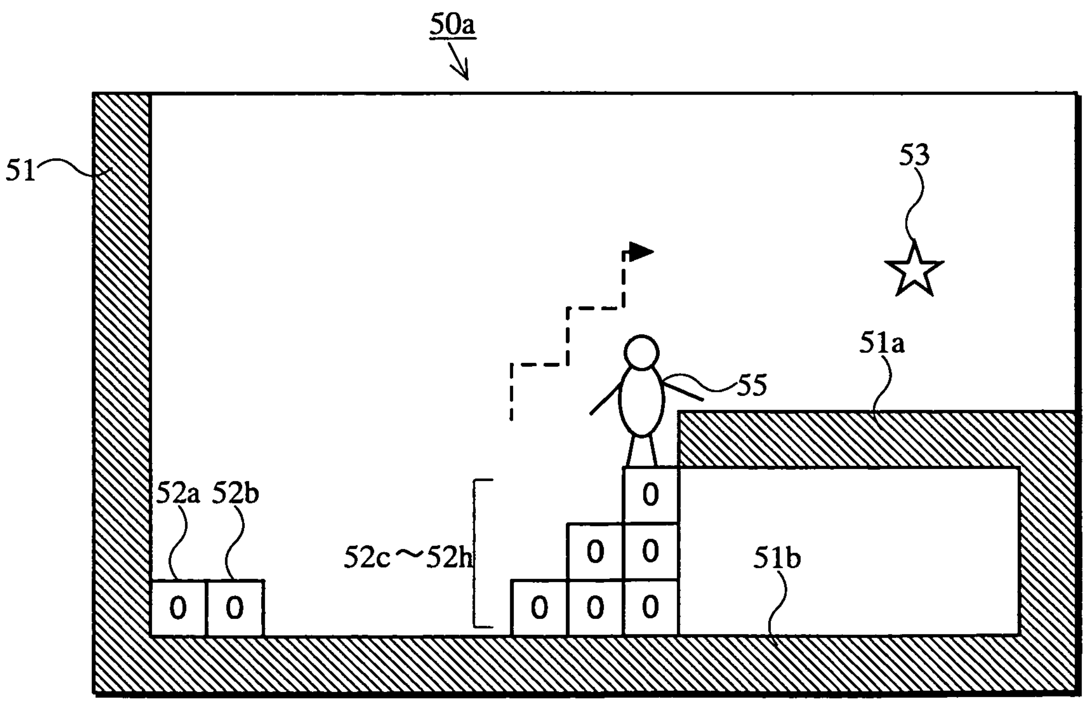
50a
51
53
51a
55
52a 52b
52c～52h
51b
0
0
0
0
0
0
0
0

FIG. 14

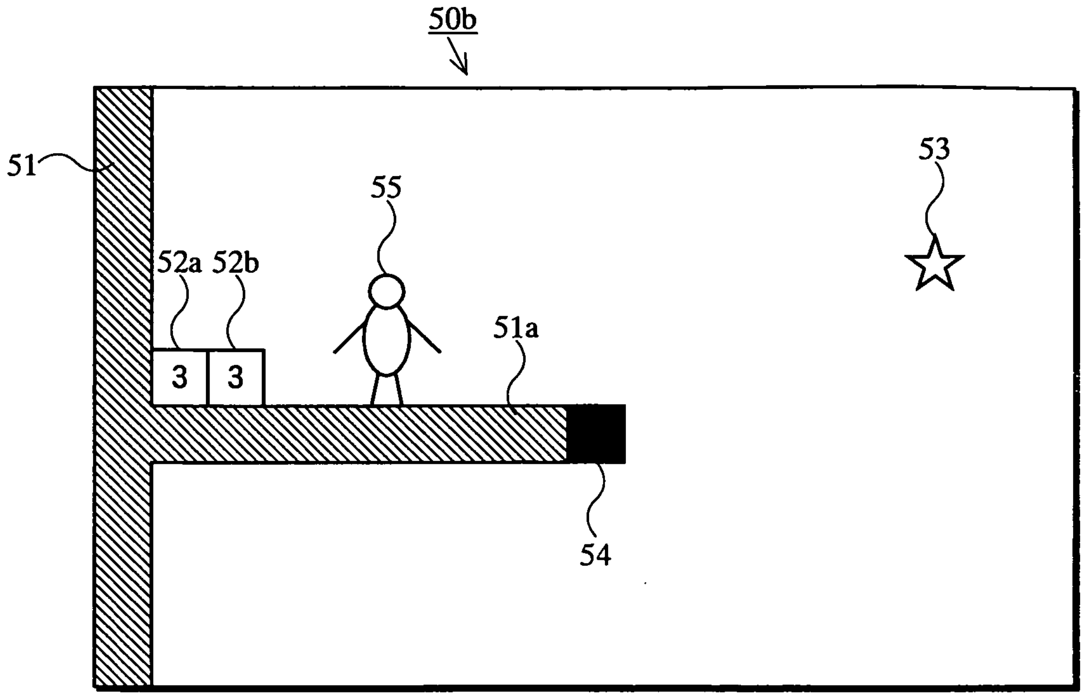


FIG. 15

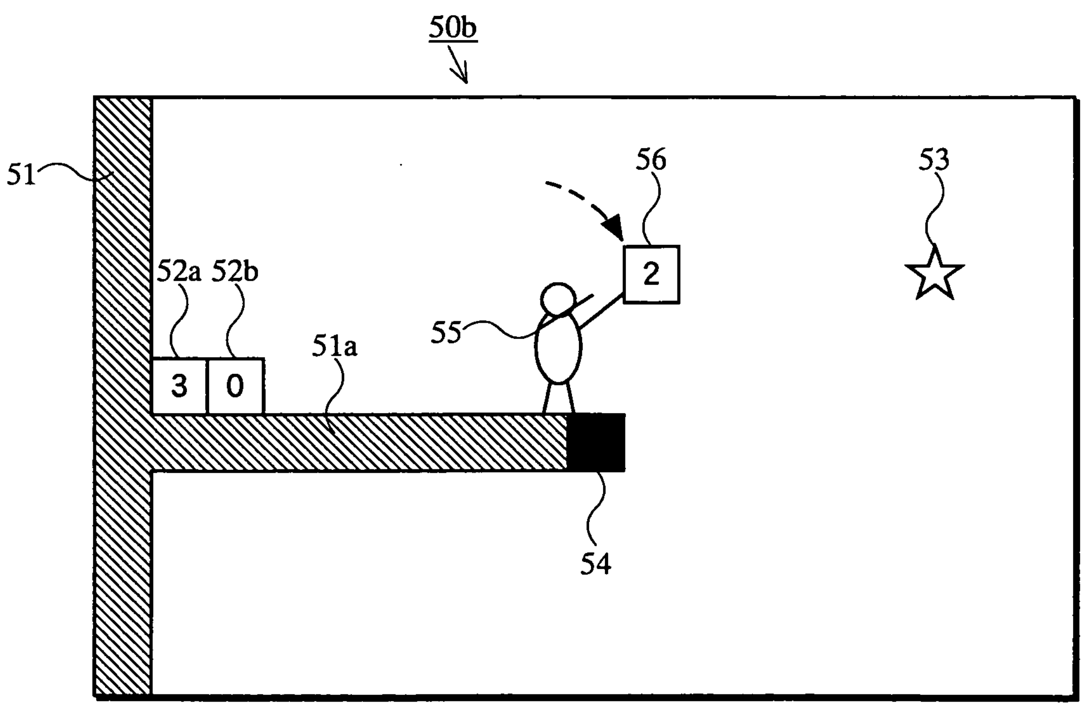

FIG. 16

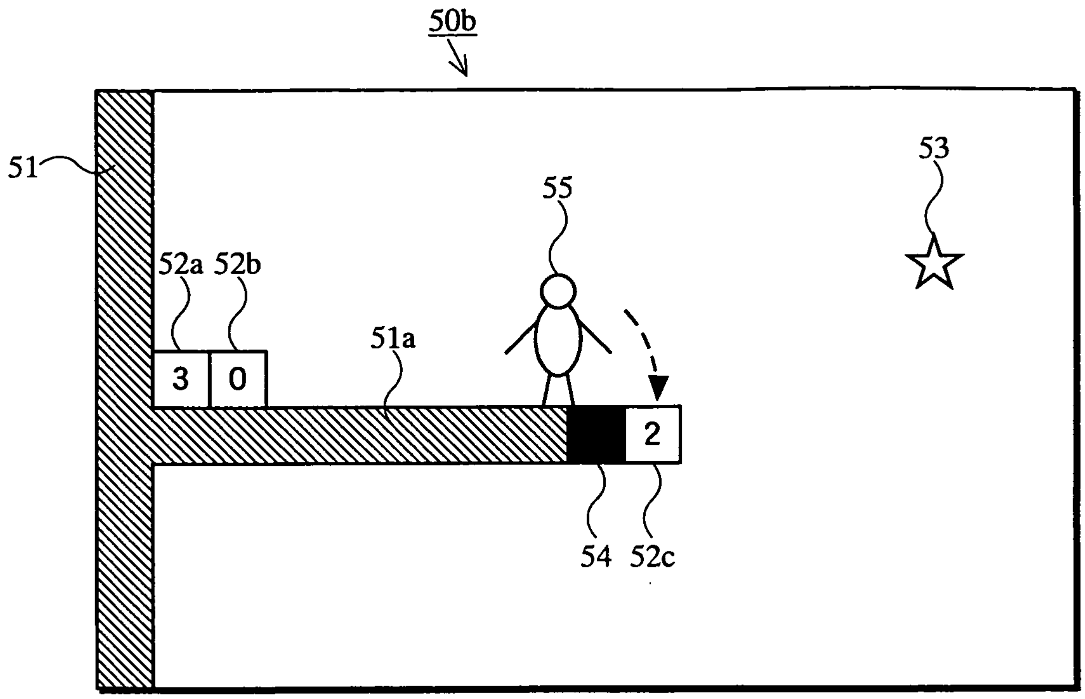
50b
51
53
55
52a 52b
51a
3
0
2
54 52c

FIG. 17

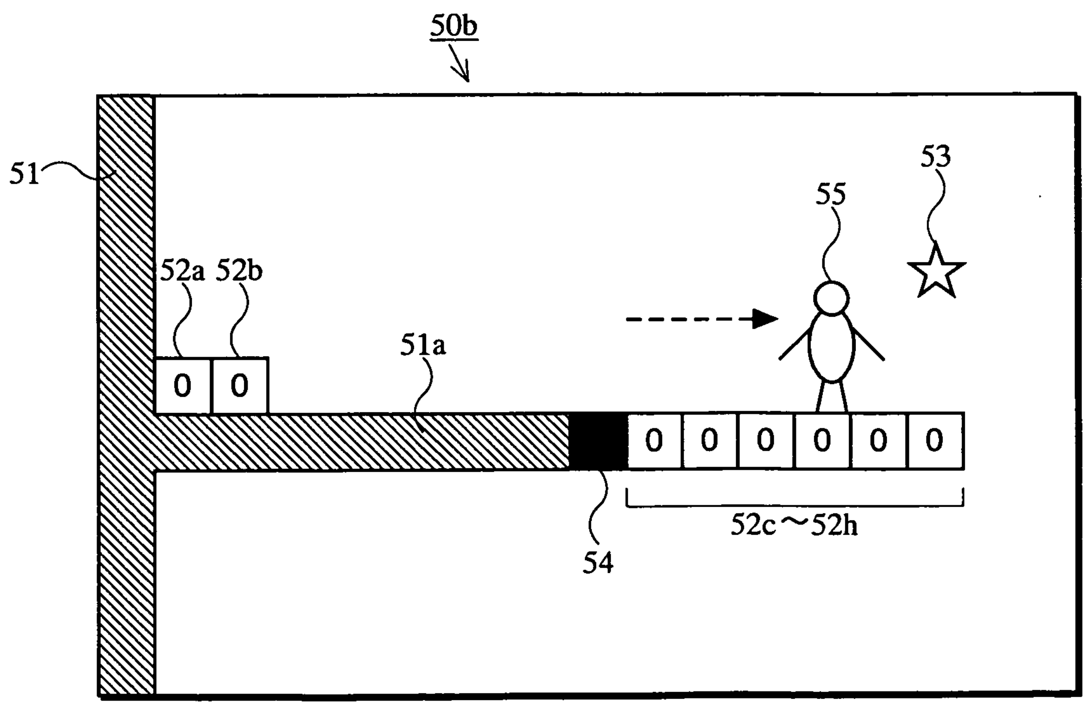
50b
51
53
55
52a 52b
51a
0
0
0 0 0 0 0 0
52c〜52h
54

F I G. 1 8 A

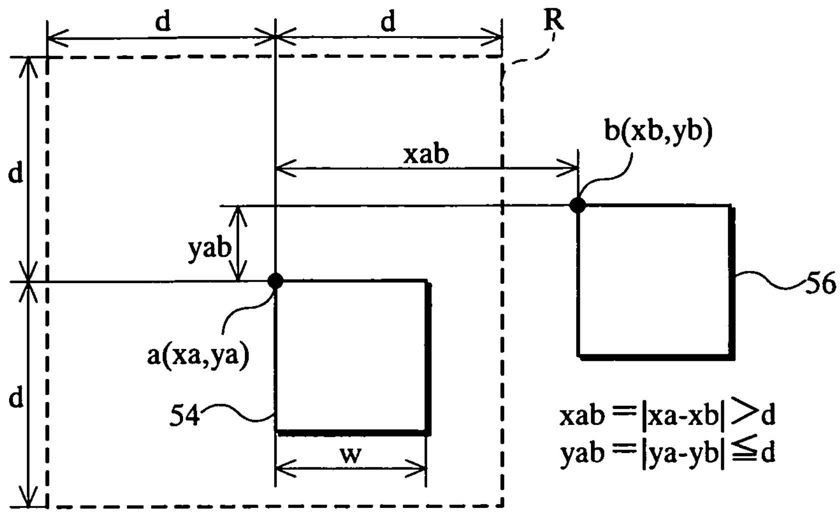


F I G. 1 8 B

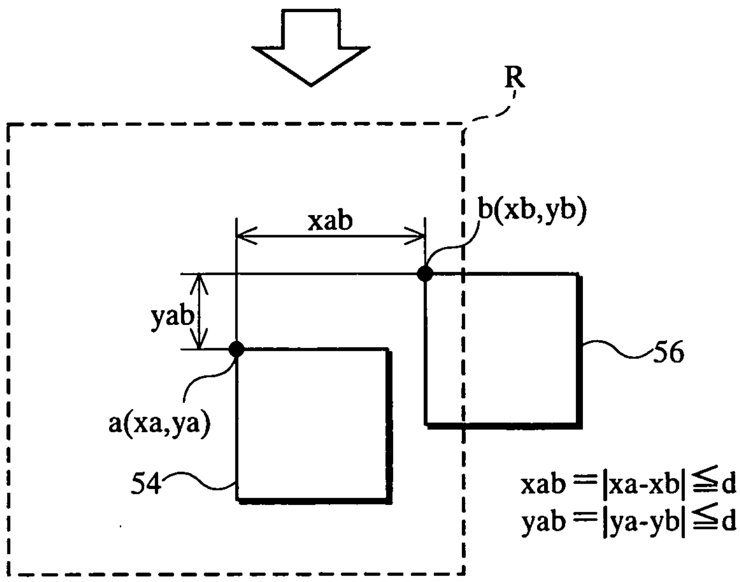


F I G. 1 8 C

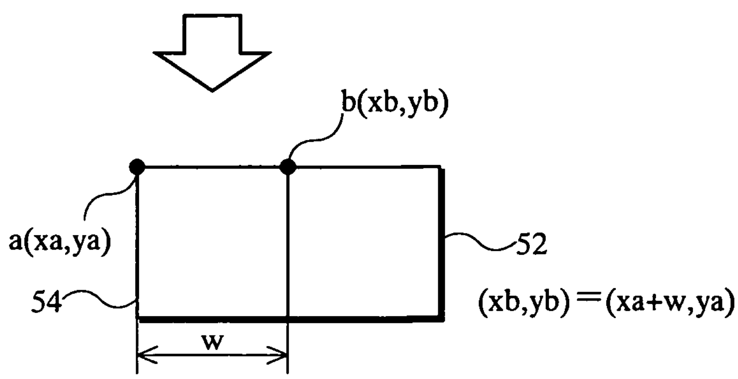

European Patent Office

# EUROPEAN SEARCH REPORT

Application Number
EP 04 00 3006

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | UNKNOWN: "FGODMOM: Techniques and Play" THE FAIRY GODMOTHER, [Online] 7 March 2003 (2003-03-07), XP002283769 Retrieved from the Internet: URL:http://images.beggerlybend.com/fgodmom/techniques/techniques_gfx.html> [retrieved on 2004-06-08] Fair Godmother is (c) 1996 soggybread software, john blackwell * page 2, lines 1,2 * * page 2, items 1; 2; paragraph 8 * * page 3, section Ladders * * page 11, item 3,6 * * page 13, item 11 * * page 12, items 8, 9 * * publication date taken from <URL:http://images.beggerlybend.com/fgodmon/techniques> * ----- | 1-12 | A63F13/10 |
| Y | TOM VOTAVA: "Solomon Key FAQ/Walkthrough" SOLOMON'S KEY, [Online] 7 February 2002 (2002-02-07), pages 1-25, XP002283768 Retrieved from the Internet: URL:http://db.gamefaqs.com/console/nes/file/solomons_key_a.txt> [retrieved on 2004-06-08] * page 2, section 3, 5, last paragraph * * page 3, "Medicine of Mapros" * * game itself is (c) 1987 Tecmo Software ----- -/-- | 1-12 | TECHNICAL FIELDS SEARCHED (Int.Cl.7) A63F |

The present search report has been drawn up for all claims

| Place of search | Date of completion of the search | Examiner |
|---|---|---|
| Munich | 21 July 2004 | Ruf, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

European Patent Office

# EUROPEAN SEARCH REPORT

Application Number
EP 04 00 3006

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | ERNST VAARTIES: "Lemmings 2: The Tribes - Highland Tribe" THE LEMMINGS SOLUTION, [Online] 9 October 2000 (2000-10-09), XP002283770 Retrieved from the Internet: URL:http://home.wanadoo.nl/lemmings-solution/lemmings2/highland.html> [retrieved on 2004-06-08] game itself has - Release Date June 1, 1994, Publisher: Psygnosis, Developer: DMA Design * Index "WEE BEASTIES", first paragraph, page 2 * * Index "Stop your ticklin'Jock!", first paragraph, page 2 * ----- | 1-12 | |
| A | JULIAN MCKENZIE: "BipBop II" MOBYGAMES, [Online] 22 May 2000 (2000-05-22), XP002283771 Retrieved from the Internet: URL:http://www.mobygames.com/game/view_review/reviewerId,1177/gameId,1448/platformId,2/> [retrieved on 2004-06-08] * section "The Good:" first 3 lines * game itself has - Release Date 1993, Developer S&M Software ----- | 2,8 | TECHNICAL FIELDS SEARCHED (Int.Cl.7) |

The present search report has been drawn up for all claims

| Place of search | Date of completion of the search | Examiner |
|---|---|---|
| Munich | 21 July 2004 | Ruf, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)